# EUROPEAN PATENT SPECIFICATION

(11) **EP 1 508 236 B1**
(45) Date of publication and mention of the grant of the patent: **11.07.2007**
(21) Application number: 03737969.0
(22) Date of filing: 23.05.2003
(51) Int. Cl.: H04L 29/06, G06F 1/00

(54) **METHOD FOR AUTHENTICATING A USER TO A SERVICE OF A SERVICE PROVIDER**
VERFAHREN ZUR AUTHENTIFIZIERUNG EINES ANWENDERS BEI EINEM ZUGANG ZU EINEM DIENST EINES DIENSTEANBIETERS
PROCEDE D'AUTHENTIFICATION D'UN UTILISATEUR D'UN SERVICE D'UN FOURNISSEUR DE SERVICES

(30) Priority: 24.05.2002 EP 02011440
(43) Date of publication of application: 23.02.2005
(73) Proprietor: TELEFONAKTIEBOLAGET LM ERICSSON (publ), 164 83 Stockholm (SE)
(72) Inventor: BUSBOOM, Axel, 91364 Unterleinleiter (DE); QUINET, Raphael, B-4000 Liège (BE); SCHUBA, Marko, 52457 Aldenhoven (DE); HOLTMANNS, Silke, 01620 Vantaa (FI)
(74) Representative: Tonscheidt, Andreas
(86) International application number: PCT/EP2003/005421
(87) International publication number: WO 2003/100544

(56) References cited:
- WO-A-01/11450
- WO-A-01/82190
- US-A- 5 740 361
- US-A1- 2001 037 469

## Description

### Technical field of the invention

The present invention relates to the field of authentication, especially to a method for authenticating a user to a service of a service provider.

### Background of the invention

Many electronically available services like web sites on the Internet or e-commerce require a user identification and authentication for a number of purposes like offering access to confidential information or services or resources, e.g. web-based email access, or online banking, like offering personalized services, adapted to a user profile, like data mining, i.e. drawing conclusions from the interactions of a multitude of users with the service, e.g. for creating profiles of a user's behavior as a consumer, or like verifying the user's credit worthiness in e-commerce applications e.g. by making sure that the user has always paid his bills. User identification and authentication can be also required for granting access to other forms of services like access to physical units like doors of vehicle or a company building or a steering wheel.

Identification means the specification of an identity that unambiguously identifies a certain user or group of users. The specified identity may or may not be traceable to a particular person or group of persons, i.e. the identity could be the user's name in clear text, but it could also be a randomly chosen login name. The only requirement is that only a single person or a person from a specific group of persons, in the case of a group login, can have registered under that particular user identity based on which the identification of the registered user is possible. An example is e.g. a login name of the user for accessing a service of a service provider. Authentication is defined as the verification of an identity, e.g. the verification that a user presenting a certain identity is actually the same user who has initially registered under that same identity.

Authentication is done by verifying user credentials. There are essentially three types of user credentials. First of all, something the user possesses, e.g. a key, a smart card, a passport, a company identity card, etc., secondly something the user knows, e.g. a password, a personal identification number (PIN), his mother's maiden name, etc., and thirdly bodily features of the user, e.g. iris patterns, voice, fingerprint, facial features, handwriting, etc.

A user authentication may consist of the verification of a single or of multiple types of credentials, e.g. password only vs. possession of a company ID in combination with knowledge of a PIN code. A user identity, e.g. a name of the user, is used in an identification step to relate user credentials collected from the user in the authentication to user credentials associated to the user identity as registered. By verifying that the collected user credentials and the registered user credentials match, the verification of the user identity and thus the authentication can be accomplished. Thus authentication typically comprises an identification of an entity for that authentication is requested as prerequisite and a registration of the user is typically necessary for the authentication.

In the past, each service provider typically performed its own user identification and authentication, e.g. most commonly via a username and password, possibly using a secure transport protocol, and kept track of its own user profile database. The drawback for the user is that he typically has to remember different combinations of user identities and passwords, or more general different combinations of user identities and credentials, for different service providers which is inconvenient and in most cases not very secure when the user notes his different user identities and corresponding respective passwords (credentials). Security is further compromised if the user uses same or similar combinations for different service providers. The drawback for a service provider is that it has to maintain own databases and has to execute all steps for authentication by its own. In addition, service-provider-owned authentication is typically based on a single or a very limited number of user credential types due to technical and economical reasons, because setting up the appropriate infrastructure for the collection and processing of user credentials of different types is costly, which is a severe barrier for the introduction of modem authentication methods like methods based on biometrics or based on smart cards like a Subscriber Identity Module (SIM) card in a mobile phone.

Recently, a number of technologies have emerged, e.g. Microsoft® Passport, see e.g. Microsoft Passport Technical White Paper, March 2001, published on http://www.passport.com, that aim at separating the authentication from the actual service. In this case, an "Identity Provider" ("IdP") is responsible for user registration and, whenever the user wants to access a service, for user authentication. User registration and user authentication can be implemented in a single entity or can be separated. The provider of the actual service ("Service Provider", "SP") may or may not be identical with the identity provider. An identity provider could act as a provider of some services itself and in addition provide identity services towards external service providers. In Microsoft ® Passport, user authentication is always done via a username/password mechanism, transported via SSL, without any restrictions on the password change interval for accessing to any kind of service registered to Microsoft ® Passport.

The separation of the identity provider and service provider functionalities has a number of advantages: The service provider not necessarily has to handle its own user registration and authentication, but can "outsource" these to the identity provider. More importantly, however, the user can avail of a single, consistent log-in procedure across different services. As mentioned, today users either need to remember and/or possess separate authentication credentials for each service provider, or they re-use credentials such as passwords which, of course, compromises the security. For example, an attacker could eavesdrop an unencrypted password the user enters at a web portal and then use it to try to get access to the user's online bank account with the same password.

However, the known identity provider solution Microsoft ® Passport does not distinguish between different security requirements for different services or service providers. The security requirement by a service provider can strongly depend on the purposes for which the authentication is needed. For simply providing a personalized web portal, a lower security level will typically be sufficient than for online access to a bank account or for authorizing a major monetary transaction. Rather, Microsoft ® Passport considers authentication a binary decision like being authenticated or being not authenticated based on a single credential type and assumes that the static authentication mechanism based on the username - password combination is known to both the identity provider and the service provider, and has been - explicitly or implicitly - agreed upon beforehand. This obviously has a number of disadvantages, including first of all the inability to cope with different types of security requirements for different services/resources and the inability to cope with changes in the security requirements over time. If a Passport-like identity provider ever decides to change the authentication process, this would need to be communicated to each service provider separately using out-of-band means, or the service provider simply would have to hope that any changes that the identity provider applies, are "reasonable".

WO 01/11450 discloses a system architecture and a method for a single sign on authentication to multiple information resources. The security architecture associates trust-level requirements with information resources and authentication schemes based on passwords, certificates, biometric techniques and smart cards are associated with the trust levels. Upon receipt of a request for access to an information resource without prior authentication to a sufficient trust level, a gatekeeper interposed between the client entity and the information resources uses a credential gathering service for obtaining a login credential for the client entity in accordance with a mapping rule establishing a correspondence between the sufficient trust level and a set of suitable credential types.

The system described in WO 01/11450 A1 has a number of limitations. First of all, it relies on associations between the information resources and trust levels and mapping rules between the trust levels and the credential types used for the authentication, both, requiring a priori knowledge and prior agreement on the associations and the mapping rules between the entity providing identity provider functionality and the information resource. Furthermore, all information resources that are associated to the same trust level are handled in the same way. This becomes especially a problem whenever an identity provider decides to change an association and/or a mapping rule, because not all of the information resources (or providers of the respective information resources) being affected by the change may find the change acceptable e.g. due to security, technical or business-related reasons. Thus, in the end not the provider of the information resource or the information resource itself but the identity provider determines the authentication process, i.e. determines which particular credentials are to be used for a particular authentication.

However, these kinds of policy decisions taken by an identity provider are not acceptable for many service providers. An updating of associations or mapping rules may thus result in conflicts with the service providers. Static or pre-defined associations or mapping rules are not flexible enough to serve the requirements of the entities involved. In addition, it is rather complicated to express all possible combinations of authentication schemes and credential types by predefined associations or mapping rules for satisfying the various security requirements for all service providers and type of services especially in the view of the increasing amount and variety of authentication methods and the, sometimes rapidly, changing requirements of the service providers. Due to the inherent inflexibility of predefined associations or mapping rules for such a large variety of possibilities, cumbersome association or mapping rule updating operations, if ever possible, have to be executed before an authentication according to a new security requirement can be made. This inflexibility is especially a drawback in ad-hoc situations, e.g. when access to a, e.g. newly introduced, service being not associated to any or valid trust level is requested. A further limitation is that all information flow including requests and responses during a session between the client and the information resource accessed goes through the gatekeeper as an in-path component. However, using an identity provider as an in-path component for the complete information flow between a user client and the service provider unnecessarily increases the load for the identity provider.

Another limitation common for Microsoft ® Passport and WO 01/11450 A1 is that a single identity provider is used for authentication purposes. This restriction forces users and service providers to trust a single identity provider. However, a centralized authentication instance is often not acceptable for users and service providers because of privacy, trust, business, or cost reasons. For example, a user may not want user-related information like different type of credentials to be gathered at a single identity provider in order to prevent unnecessary data aggregation or even fraud.

The patent application US 2001/037469 A1 discloses an authentication method for externalizing the authentication from an application server to a login server. The method for authentication includes the steps of requesting access for the client to information from the application server, requesting authentication of the client by a login server, and authenticating the client based on e.g. a username and password. After authentication, the application server can communicate directly with the login server to verify that the authentication has been performed.

### Summary of the invention

It is an object of the present invention to provide methods, devices, and computer programs that provide an authentication of a user to a service of a service provider in more secure and flexible way.

This object is achieved by the methods as described in claims 1 and 8. Furthermore, the invention is embodied in devices as described in claims 4, 19, 25, and 31 and computer programs as described in claims 33 and 34. Advantageous embodiments are described in the further claims.

A method for an authentication of a user to a service of a service provider is disclosed.

The method can start by requesting access for the user to the service of the service provider. The request may be sent from a device of the user to the service provider triggering the service provider to proceed with the following steps. Alternatively, the request may be pre-configured and reaches the service provider e.g. at predefined times or intervals.

Triggered by the request for access, the service provider selects one or more authentication security profiles for specifying an authentication security requirement for the authentication of the user to the service.

The method proceeds by sending an indication of the one or more selected authentication security profiles and a user identity identifying the user to an identity provider for requesting the authentication of the user by the identity provider, i.e. the service provider sends from its associated device or an device being, e.g. remotely, accessible by the service provider the one or more selected authentication security profiles as one form of an indication for indicating to the identity provider the authentication security requirement in the form of one or more authentication security profiles based on one of them the authentication is to be executed. In addition, the user identity is sent to the identity provider for the purpose of an identification of the user for the authentication step.

Next, based on the user identity and one of the one or more selected authentication security profiles, the user is authenticated by the identity provider. Authentication can be accomplished by identifying the user, e.g. as previously registered to the identity provider, and verifying the user on base of the user identity according to the one authentication security profile.

Finally, the information about a result of the authentication by the identity provider can be send to the service provider. In particular, an assertion indicating the authentication of the user is sent to the service provider, e.g. for indicating that the authentication of the user has been accomplished according to the authentication security requirement as specified by the authentication security profile by the service provider. Depending on the implementation or use case, the assertion can e.g. specify the one authentication profile used for authentication or simply indicate "authentication successful". Other implementations for the assertion are possible.

The method improves the authentication of a user to a service of a service provider and makes the method especially very secure for the service provider, because the service provider and not the identity provider determines in the end the security requirement to be fulfilled by the identity provider for the authentication of the user according to one of the authentication security profiles as selected by the service provider. The method is also more secure for the identity provider because it can be clearly and on-the-fly instructed which authentication requirement of the service provider currently applies and has to be fulfilled for the current authentication of the user. The authentication security requirement of the service provider may change. In this case, the service provider may immediately adapt to its changed security requirement by selecting another authentication security profile thus making the method more secure but also very flexible for the service provider. Thus especially in ad-hoc scenarios but also further situations and environments with changing authentication security requirements for the service provider, the service provider can act flexibly and can immediately specify and communicate to the identity provider its changed authentication requirement by one or more selected authentication profiles when requesting authentication from the identity provider. Furthermore, the method does not require the service provider to make usage of a specific single identity provider. Instead, any identity provider can be used for the authentication. In addition, it is not required to have the identity provider as in-path component interposed between the service provider and the client.

According to a preferred embodiment, the one or more authentication security profiles comprise at least one security attribute for, e.g. more precisely, specifying the authentication security requirement. The service provider can assemble one or more authentication security profiles by specifying security attributes. By doing its own specification, the service provider can tailor an authentication security profile exactly to its security requirement. The service provider may, alternatively or in addition, select a pre-defined authentication security profile comprising one or more security attributes arranged in a pre-defined manner. Authentication capabilities of the identity provider and/or the user may be taking into consideration when specifying and/or selecting an authentication security profile based on one or more security attributes. Examples for a security attribute are a specification describing an item from a group of a credential, a transport layer security, a network security, a link layer security, timing information, a policy, a fraud detection measure, a liability and/or guarantee and other security features. The security attribute can comprise a specification of a type, e.g. a credential type like password or biometrics, and a specification of a value associated to a particular type, e.g. a password length associated to a password or a fingerprint of certain resolution associated to biometrics. Using security attributes, the identity provider can be precisely instructed by the service provider based on which security features according to the requirements of the service provider the authentication of the user has to be executed by the identity provider.

According to another preferred embodiment, the service provider selects the one or more authentication security profiles from a group of one or more security profiles that are indicated to be supported by the identity provider for the authentication. Selecting the one or more authentication security profiles from a group of one or more supported authentication security profiles increases the probability for a successful authentication.

According to a another preferred embodiment, the service provider receives an indication for the group of the one or more supported security profiles from the identity provider, e.g. by sending a list of supported authentication security profiles. The indication can be also an URI pointing to a server from which the group can be obtained, e.g. downloaded, by the service provider. Other ways of indications are possible. Preferably, the indication for the group or the group itself as one form of an indication is sent to the service provider when changes in the authentication capabilities of the identity provider occur, e.g. when the identity provider discards a certain security attribute like a credential type and/or credential value from being supported, e.g. password length shorter than 4 characters being no longer supported, or if the identity provider offer a newly introduced credential type or value, e.g. finger prints being supported as from today.

According to another preferred embodiment, said one authentication security profile based on which the authentication is executed is selected by the identity provider from the one or more selected authentication security profiles. By doing so, the identity provider can avoid to ask the service provider based on which one of the selected authentication security profiles the authentication is to be executed. Instead, the identity provider can assume that all of the selected and indicated authentication security profiles meet the authentication security requirement of the service provider and can select the one that fits best, e.g., to the needs or capabilities of the identity provider and/or of the user that has to authenticated. Furthermore, the interaction between the service provider and the identity provider for negotiating the authentication security profile based on which the authentication of the user is actually executed can be minimized and thus the speed and probability of a successful authentication increased.

According to another preferred embodiment, the one or more selected authentication security profiles can be related by one or more relations to one or more further authentication security profiles. Each of these relations express an ordering of the one or more selected authentication security profiles to the one or more further authentication security profiles regarding an authentication security strength. Examples for relations are directed edges expressing e.g. a stronger than or equally strong as relation between two authentication security profiles. Selected authentication security profiles may also be related with each other. Based on the relation of the one or more selected authentication security profiles to the one or more further authentication security profiles, i.e. the information about the ensemble of the selected and the further authentication profiles and the respective relations, the step of authenticating the user based on one of the one or more selected authentication security profiles can be executed by selecting by the identity provider one of the one or more further authentication security profiles being related equally strong or stronger regarding the authentication security strength compared to the one or more selected authentication security profiles and authenticating the user based on the further authentication security profile as selected by the identity provider. Thus, the variety and number of authentication security profiles meeting the authentication security requirement of the service provider is enlarged. From the enlarged variety and number of the authentication security profiles the identity provider can flexibly select one authentication profile for the authentication, e.g. one that fits best to certain capabilities as explained before, thus increasing the possibility for a successful authentication and the speed of the authentication.

According to another preferred embodiment, the service provider can specify the one or more relations to the one or more further authentication security profiles and the service provider can send an indication of the one or more relations to the one or more further authentication security profiles to the identity provider. By doing so, the relations between the one or more selected and the one or more further authentication security profiles more precisely reflect the authentication security requirement of the service provider which can lead to a faster authentication with less interaction for the negotiation of an authentication security profile to be actually used for the authentication.

According to another preferred embodiment, the assertion is supplemented by an indication of the authentication security profile based on which the authentication is executed and the indicated authentication security profile is checked by the service provider for acceptance. Providing the service provider with information about the authentication security profile based on which the authentication is executed increases further the security for the service provider and provides the service provider with the possibility to e.g. check if the authentication security profile actually been used for the authentication satisfies its current authentication security requirement.

A method for an authentication of a user to a service of a service provider is disclosed. The method comprises the steps of requesting access for the user to the service of the service provider, sending a user identity identifying the user to an identity provider for requesting the authentication of the user by the identity provider, authenticating the user based on the user identity and an authentication security profile, sending an assertion indicating the authentication of the user to the service provider, the assertion being supplemented by an indication of the authentication security profile, and checking by the service provider the indicated authentication security profile for acceptance.

Here, the service provider does not provide the identity provider with its security authentication requirement beforehand the authentication, which can be advantageous for some implementations. However, the service provider is still capable to verify that the authentication of the user to the service matches to the authentication security requirements of the service provider by checking the indicated authentication security profile based on which the authentication of the user is executed versus the security requirement of the service provider. Furthermore, flexibility for the identity provider can be increased due to the fact that an authentication based on any authentication security profile supported by the identity provider can be used for the authentication, preferably matched to the authentication capabilities of the user, if a credential verification is necessary. In the end, it is the service provider that is empowered to decide if a user is or is not sufficiently authenticated.

Both methods can further comprise the step of receiving at the service provider from a user device the user identity and a reference to the identity provider in response to a request for authentication sent from the service provider to the user device. This interaction with the user device is very common and can ease the implementation.

Based on the received assertion, the access to the service based on the assertion can be granted. Alternatively, access to the service can be granted based on the assertion and based on the check for acceptance, e.g. by checking if the indicated authentication security profile matches to the authentication security requirement of the service provider thus increasing the security of the authentication especially for the service provider.

According to another preferred embodiment, the method can comprise a step of an authentication upgrade. The authentication upgrade can be executed by performing a further authentication based on the further authentication security profile. The selection and the further authentication can be executed according to any of the steps relating to the selection and the authentication of the method for authenticating the user to the service of the service provider as described before, e.g. the service provider may select one or more authentication security profiles and send these to the identity provider which selects one of them for authentication of the user. The identity provider may select one authentication security profile based on relations and may indicate an selected authentication security profile based on which the authentication is executed to the service provider, which can e.g. check the indicated authentication security profile if it matches to its authentication security requirement for the authentication. The upgrade functionality can provide the user and the service provider to continue a session if a service with a stronger authentication security requirement is to be accessed.

According to another preferred embodiment, the authentication upgrade can comprise a change to a further identity provider for executing the further authentication of the user based on the further authentication security profile, thus e.g. enabling to continue the service session in case that the previous identity provider cannot support the further authentication profile according to the stronger authentication security requirement of the service provider.

The invention is further embodied in devices. In the following, a device associated to a service provider and a device associated to an identity provider are described.

A device associated to a service provider is disclosed. The device associated to the service provider comprises a receiving unit for receiving messages, a transmitting unit for sending messages, and a processing unit for processing messages and information. The device associated to the service provider can be adapted to receive a request for access of a user to a service of the service provider, to select one or more authentication security profiles for specifying an authentication security requirement for an authentication of the user to the service, to send an indication of the one or more selected authentication security profiles and a user identity identifying the user to an identity provider for requesting the authentication of the user by the identity provider, and to receive an assertion indicating the authentication of the user by the identity provider.

According to a preferred embodiment, the device associated to the service provider can be adapted to select the one or more authentication security profiles comprising at least one security attribute for specifying the authentication security requirement.

According to another preferred embodiment, the device associated to the service provider can be adapted to select the one or more authentication security profiles from a group of security profiles that are indicated to be supported by the identity provider for the authentication.

According to another preferred embodiment, the device associated to the service provider can be adapted to receive an indication for the group of the one or more supported security profiles from the identity provider.

According to another preferred embodiment, the device associated to the service provider can be adapted to relate the one or more selected authentication security profiles to one or more further authentication security profiles, each relation expressing an ordering of the one or more selected authentication security profiles to the one or more further authentication security profiles regarding an authentication security strength, and the device can be further adapted to send at least the one or more relations to the one or more further authentication security profiles being related equally strong or stronger regarding the authentication strength to the identity provider for the authentication.

According to another preferred embodiment, the device associated to the service provider can adapted to receive an indication of the authentication security profile based on which the authentication of the user is executed by the identity provider and the device is further adapted to check the indicated authentication security profile for acceptance.

Alternatively or in addition, the device associated to the service provider can be adapted to receive a request for access of a user to a service of the service provider, to send a user identity identifying the user to an identity provider for requesting an authentication of the user by the identity provider, to receive an assertion indicating the authentication of the user from the identity provider, the assertion being supplemented by an indication of the authentication security profile, to check the indicated authentication security profile for acceptance.

According to another preferred embodiment, the device associated to the service provider can be adapted to receive the user identity and a reference to the identity provider from a user device in response to a request for authentication sent from the device associated to the service provider to the user device.

According to another preferred embodiment, the device associated to the service provider can be adapted to grant access to the service based on the assertion.

According to another preferred embodiment, the device associated to the service provider can be adapted to grant access to the service based on the assertion and the check for acceptance.

According to another preferred embodiment, the device associated to the service provider can be adapted to execute an authentication upgrade based on a further authentication based on a further authentication security profile.

According to another preferred embodiment, the device associated to the service provider, can be adapted to change for the authentication upgrade to a further identity provider for executing the further authentication.

A device associated to an identity provider is disclosed. The device associated to the identity provider comprises a receiving unit for receiving messages, a transmitting unit for sending messages, and a processing unit for processing messages and information. The device associated to the identity provider can be adapted to receive a request for an authentication of a user. The request comprises a user identity identifying the user to the identity provider, e.g. to the device associated to the identity provider, and an indication for one or more authentication security profiles specifying an authentication security requirement of the service provider for the authentication of the user to a service of the service provider. The device associated to the identity provider can be further adapted to authenticate the user based on the user identity and one of the one or more authentication security profiles, and to send an assertion indicating to the service provider the authentication of the user.

According to a preferred embodiment, the device associated to the identity provider can be adapted to authenticate the user based on at least one security attribute comprised in the one authentication security profile based on which the authentication is executed.

According to another preferred embodiment, the device associated to the identity provider can be adapted to send an indication for a group of one or more security profiles that are supported for the authentication by the identity provider to the service provider.

According to another preferred embodiment, the device associated to the identity provider can be adapted to select said one authentication security profile based on which the authentication is executed from the one or more authentication security profiles.

One or more authentication security profiles can be related by one or more relations to one or more further authentication security profiles. Each of the one or more relations express an ordering of the one or more authentication security profiles to the one or more further authentication security profiles regarding an authentication strength. The device associated to the identity provider can be adapted to execute the authentication of the user by selecting one of the one or more further authentication profiles being related equally strong or stronger regarding the authentication security strength compared to the one or more authentication security profiles and by authenticating the user based on the selected further authentication security profile.

According to another preferred embodiment, the device associated to the identity provider can be adapted to receive an indication for the one or more relations to the one or more further authentication security profiles from the service provider.

According to another preferred embodiment, the device associated to the identity provider can be adapted to supplement the assertion with an indication of the authentication security profile based on which the authentication is executed.

Alternatively or in addition, the device associated to the identity provider can be adapted to receive a request for an authentication of a user. The request comprises a user identity identifying the user to the identity provider, e.g. the device of the identity provider. The device associated to the identity provider can be adapted to authenticate the user based on the user identity and an authentication security profile and to send an assertion indicating to the service provider the authentication of the user. The assertion is supplemented by an indication of the authentication security profile based on which the authentication of the user is executed.

According to another preferred embodiment, the device associated to the identity provider can be adapted to execute an authentication upgrade being based on a further authentication based on a further authentication security profile.

The invention is further embodied in one or more computer programs. The one or more computer programs comprise portions of software codes loadable into devices for executing any of the steps of the authentication method. The one or more computer programs can be stored on a computer readable medium. The computer-readable medium can be a permanent or rewritable memory within a device or located externally. The computer program can be also transferred to a device for example via a cable or a wireless link as a sequence of signals.

In particular a computer program loadable into a device associated with a service provider is disclosed. The computer program comprises code adapted to process a request for access of a user to a service of the service provider, to select one or more authentication security profiles for specifying an authentication security requirement for an authentication of the user to the service, to initiate a sending of an indication of the one or more selected authentication security profiles and a user identity identifying the user to an identity provider for requesting authentication of the user by the identity provider, and to process an assertion indicating the authentication of the user by the identity provider.

Alternatively, the computer program may be in a format that the software portions relating to the selection of the one or more authentication security profiles and the sending of the indication of the one or more authentication security profile to the identity provider are not included or skipped and instead or in addition, the computer program comprises code adapted to check an indicated authentication security profile based on which the authentication of the user is executed for acceptance, the indicated authentication profile being entered into the computer program in conjunction with the assertion.

Furthermore, a computer program being loadable into a device associated to an identity provider is disclosed. The computer program comprises code adapted to process a request for an authentication of a user, the request comprising a user identity identifying the user to the identity provider and an indication for one or more authentication security profiles specifying an authentication security requirement of the service provider for the authentication of the user to a service of the service provider, to execute an authentication of the user based on the user identity and one of the one or more authentication security profiles received from the service provider, and to initiate a sending of an assertion indicating to the service provider the authentication of the user.

Further ways of implementing the method according to the invention by computer programs are possible. Especially, the computer programs may implement any embodiments of the method as described.

In the following, detailed embodiments of the present invention are described with reference to the figures.

### Brief description of the drawings

- Fig. 1a: shows an example for an authentication security profile with attributes;
- Fig. 1b: shows an example for authentication security profiles and their ordering with regard to authentication security strength;
- Fig. 2: shows examples for mappings between numeric attribute values and authentication security strength;
- Fig. 3: shows a first exemplary message flow for authentication;
- Fig. 4: shows a second exemplary message flow for authentication;
- Fig. 5: shows a third exemplary message flow for authentication;
- Fig. 6: shows a fourth exemplary message flow for authentication;
- Fig. 7: shows a fifth exemplary message for authentication;
- Fig. 8: shows a sixth exemplary message flow for authentication;
- Fig. 9: shows a seventh exemplary message flow for authentication;
- Fig. 10: shows a first exemplary message flow for an authentication upgrade;
- Fig. 11: shows a second exemplary message flow for an authentication upgrade;
- Fig. 12: shows an example for a device for implementing the method;
- Fig. 13: shows a first example for devices and links between the devices for carrying out the method;
- Fig. 14: shows a second example for devices and links between the devices for carrying out the method;
- Fig. 15: shows a third example for devices and links between the devices for carrying out the method.

### Detailed description of the invention

The authentication method can be composed of the three following elements: Firstly, a data structure for describing one or more Authentication Security Profiles (ASProfs) and possible relations between ASProfs as a structured, extensible and machine-readable set. For describing the data structure, a directed graph may be used to express the relation between different ASProfs, e.g. "is stronger than or equally strong as" (≥). In this graph, each node is an ASProf, and each directed edge expresses a relation between two ASProfs. Secondly, a method for agreeing on an ASProf to be used for authentication of a user to a service of a service provider. The service provider can send one or more required ASProfs in the sense of a "wish list" to an identity provider which, in turn, decides whether or not it can comply and may make alternative suggestions for one or more ASProfs to be used. Using references and updates, as opposed to sending the full ASProfs back and forth, can reduce exchanged data. A further identity provider may be contacted for authentication if the first identity provider cannot meet the requirements of the service provider. Thirdly, a method for upgrading an ASProf during a session; upgrading an ASProf during a session involves re-negotiating the ASProf and may also require a new validation of user credentials. If the identity provider cannot meet the upgraded ASProf, the service provider may contact an alternative identity provider for the upgrade.

The level of certainty that a user who claims to have identity X actually is the user associated with this identity, can be seen on a continuous scale and depends on a number of factors, including, but not limited to:
- one or more types of user credentials verified for authentication, e.g. a password may be considered less secure than a company ID in combination with a PIN code;
- transport, network and link layer security features used when communicating authentication information (e.g. passwords) between client and server, e.g. TLS, IPsec;
- time of the most recent authentication, e.g. a PIN that has been entered ten seconds ago is typically more secure than a PIN that has been entered three days ago since an attacker could have gained unauthorized access to the client device in the meantime;
- length and complexity of the user credentials, e.g. length of password or PIN, password containing letters only vs. password containing at least two digits and at least two special characters, length of a secret key, etc.;
- policies with respect to the handling of secret user credentials, e.g. how often does a password have to be changed, after how many changes may an old password be reused, how does the identity provider protect the confidentiality and integrity of secret user credential data;
- policies with respect to key handling if a public key infrastructure (PKI) is used, e.g. how is certificate revocation handled, which root certificates are trusted, etc.;
- measures taken to detect fraud, as well as the procedures for revocation of credentials and time needed for revocation in the case of fraud detection;
- liability / guarantees provided by the identity provider to the service provider for the case of fraud;
- policies with respect to verifying the user's "real" identity upon registration to the identity provider, e.g. entering a name and personal data on a web page may be considered as less secure than verification of passport.

In the this document, the aggregation of these and other attributes influencing the certainty level of a user authentication is referred to as an "Authentication Security Profile" ("ASProf").

The ASProf is described as a set of attributes, e.g. by those attributes given above, with or without attribute values. For example, an empty or default ASProf may have attributes without having attribute values assigned to the attributes. The ASProf can be conceived to comprise policies describing processes by which authentication credentials will be handled, renewed, revoked, etc. The ASProf description is preferably changeable, extensible and machine-readable. Preferably the extensible Markup Language (XML) is used as an underlying meta-language. Extensibility is important because an ASProf is typically no closed set of data but may need to be adapted to emerging authentication technologies like biometrics and to novel security technologies, e.g. cryptographic techniques. Extensibility ensures that future attributes can be included into the ASProf and includes also changeability as a requirement for replacing attributes of a given ASProf. Relations between different attributes may exist.

Figure 1a shows an example of an ASProf A01 with different attributes like PIN B01, Smart Card B02, Biometrics B03, Transport Security B04, and Policy B05.

The ASProf can be extended by further attributes, e.g. for covering Future Technologies B06 for authentication.

Attribute values can be assigned to the attributes of an ASProf, e.g. the set of attributes may be numeric, i.e. "key length" = "128", "minimum password length" = "10", or descriptive, e.g. "Transport Security" = "TLS Tunnelling" or "Transport Security" = "WTLS" with TLS referring to Transport Layer Security and WTLS referring to Wireless TLS. Referring to Fig. 1a, attribute values may be assigned as follows:

| Attribute | Attribute Value |
|---|---|
| | |
| PIN | 10 characters |
| Smart Card | none |
| Biometrics (e.g. Fingerprint) | high resolution (200 kByte) |
| Transport Security | WTLS |
| Policy | none |

A further example of an ASProf with attributes coded in XML is shown below in Table A with annotations given in the following text. Relations between some of the attributes exist in the example below.

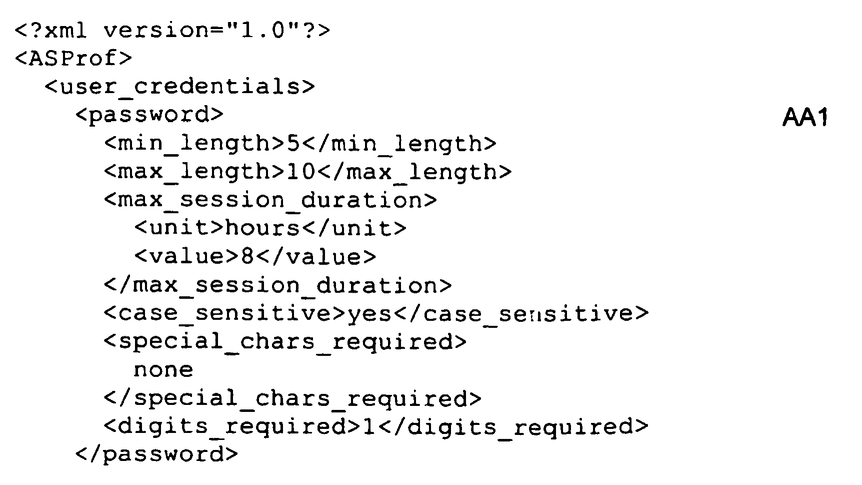

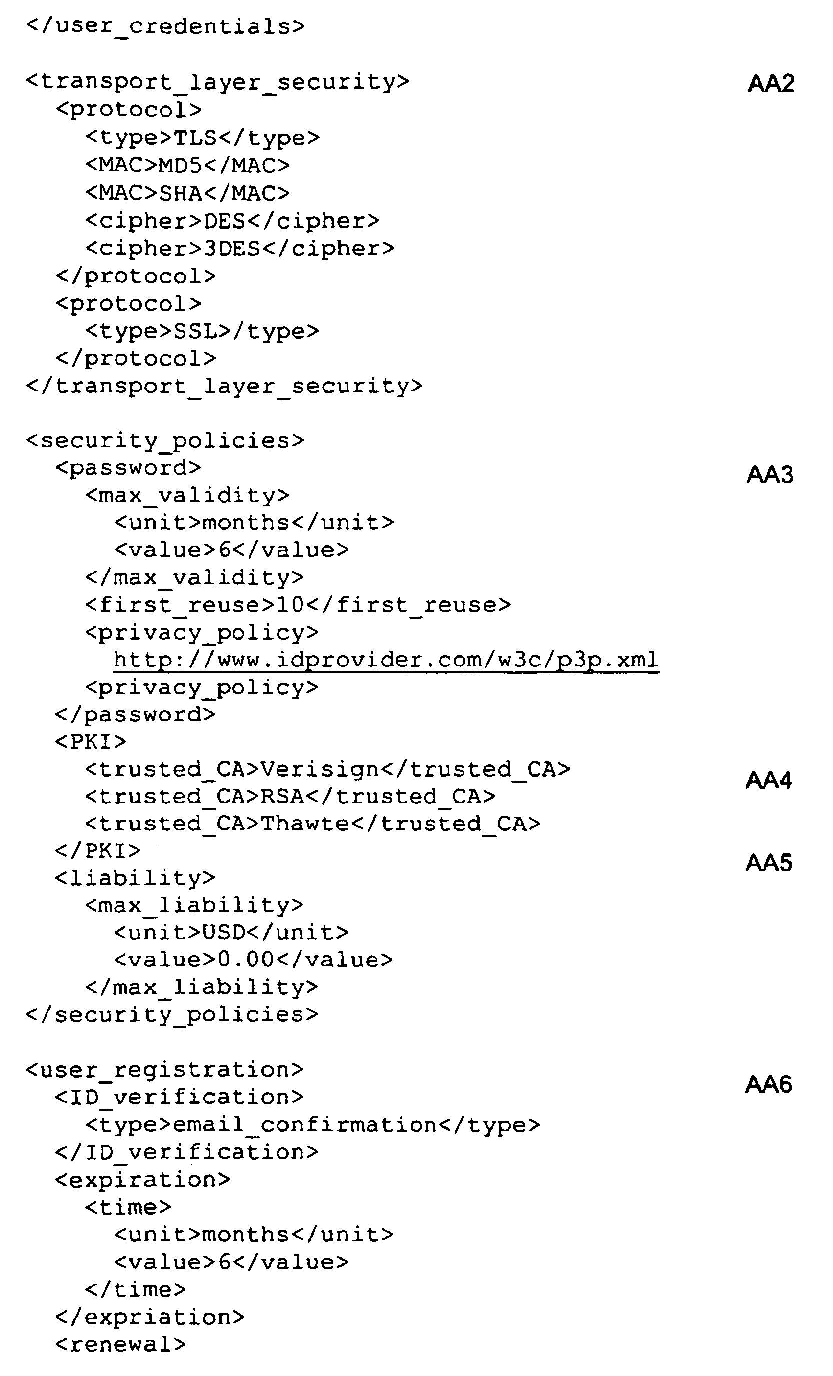

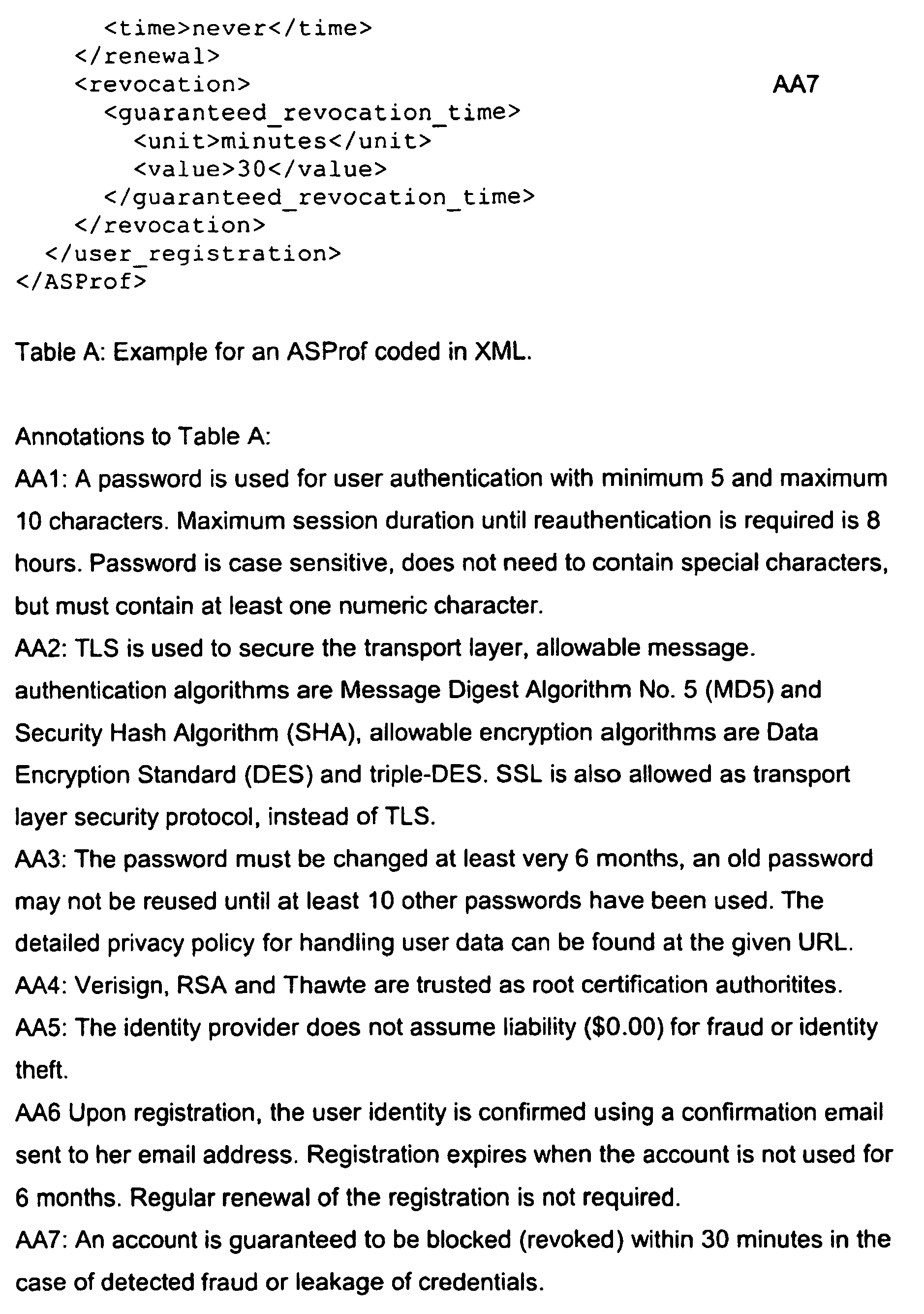

Multiple ASProfs are preferably related with respect to authentication security strength. The relations expressing the ranking or ordering of ASProfs can be described by means of a directed graph. In this graph, each node is an ASProf. The graph can have a "root node" which can be an empty ASProf, i.e. no security whatsoever. Each directed edge specifies a relation between two ASProfs, e.g. a "≥" relation. The description of the set of ASProfs and the relation between ASProfs is preferably changeable, extensible, and machine readable. Preferably XML is used as an underlying meta-language.

Special cases are conceivable, e.g. the case that the graph becomes an n-dimensional grid (in the case of n attributes). In this case, there are independent relations for each of the attributes, and the comparison of two ASProfs corresponds to the separate comparison of each of the attributes. As an example for a comparison between two ASProfs having a ≥ relation:
IF
key length 1 ≥ key length 2 AND password length 1 ≥ password length 2
THEN
ASProf1 ≥ ASProf2.

However, the more general graph notation allows for much more complex specifications, e.g. a fingerprint recognition with key length 64 is more secure than a password with key length 256. This case of "comparing apples with oranges" becomes important when completely different authentication mechanisms are used in a single system. The graph notion is more general than other concepts where the individual attributes are treated independently and allows for the expression of priorities between disparate authentication methods and technologies.

This graph can be created in principle by each service provider, and different service providers may use different graphs. A service provider may have multiple graphs, e.g. for different users or identity providers or services. This reflects the requirement that each service provider is preferably able to define its own preferences and priorities regarding authentication security features. A first service provider may consider an iris scan more secure than a keyword. A second service provider may consider the keyword more secure. This, of course, does not preclude the re-use of "default" graphs, if the service provider wishes to do so.

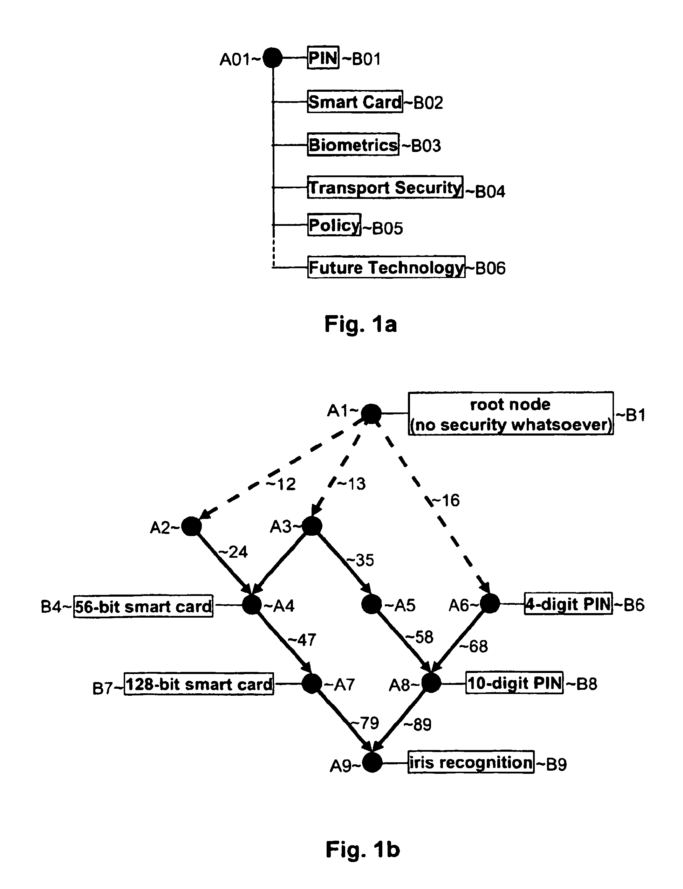

In Fig. 1b, an example for an ASProf graph is depicted. The graph comprises ASProfs A1, A2, A3, A4, A5, A6, A7, A8, A9 represented by points and connected by arrows for expressing a ≥ relation between two ASProfs. The arrow notation used in the graphical representation of Fig. 1 b means that an arrow connecting two ASProfs indicates with its arrowhead the one of the two ASProfs being ≥ compared to the further ASProf of the two ASProfs, i.e. ASProf1 → ASProf2 means ASProf2 ≥ ASProf1. Arrows 12, 13, 16, 24, 35, 47, 58, 68, 79, 89 for expressing the ≥ relations between the ASProfs can be found in the graph.

Attributes and attribute values for smart cards, PINs, and biometrics are depicted that are related to ASProfs. In particular, ASProf A4 comprises a 56-bit smart card attribute B4, ASProf A7 comprises a 128-bit smart card attribute B7, ASProf A6 comprises a 4-digit PIN attribute B6, ASProf A8 comprises a 10-digit PIN attribute B8, and ASProf A9 comprises an iris recognition attribute B9. Further attributes or combinations of attributes can be related to the ASProfs in Figure 1. In addition, a root node ASProf A1 indicating "no security whatsoever" may be defined and related to ASProfs, e.g. to ASProfs A2,A3,A6 via relations 12, 13, and 16 in Fig. 1 b. Further ASProfs or relations can be included into the graph, existing ASProfs or relations can be altered or deleted.

The knowledge of a PIN with 10 digits is defined to be ≥ the knowledge of a PIN with 4 digits. This ≥ relation is depicted by an arrow 68 starting at the ASProf A6 comprising 4-digit PIN attribute B6 and pointing to the ASProf A8 comprising 10-digit PIN attribute B8. The possession of a smart card with a 128-bit secret key is defined to be ≥ the possession of a smart card with a 56-bit secret key, Correspondingly, the ≥ relation between the ASProf B7 and the ASProf B4 is expressed by an arrow 47 pointing from the 56-bit smart card to the 128-bit smart card. Still further, an iris recognition method may be defined ≥ a 10 digit password as well as ≥ a 128-bit secret key on a smart card with arrows 89 and 79, respectively, expressing the respective ≥ relation. However, it may not make a lot of sense to try to decide whether or not a 10 digit password is ≥ a 128-bit secret key on a smart card. In case that a ≥ relation between two ASProfs is not feasible or not wanted, a corresponding arrow is missing in the graph.

An example of an XML representation of the graph depicted in Figure 1 b is given below. There are two data structures that are commonly used to represent a directed graph: (a) Using an adjacency list, which is a list of pairs with each pair representing a directed edge (sometimes also referred to as arrow or relation) with the first element of the pair specifying the originating ASProf and the second element specifying the terminating ASProf of the respective directed edge. (b) Using an incidence matrix that, for each originating node contains a list of terminating nodes to which edges exist in the graph. In the example given in Table B below, an incidence matrix representation is used. Other representations are possible.

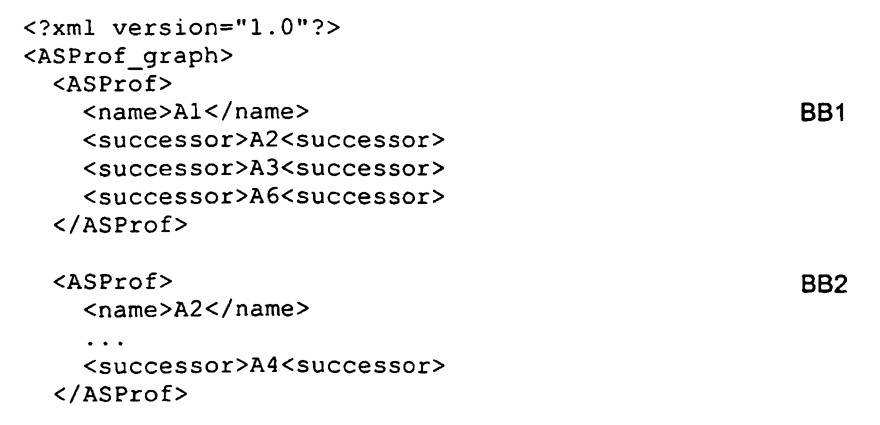

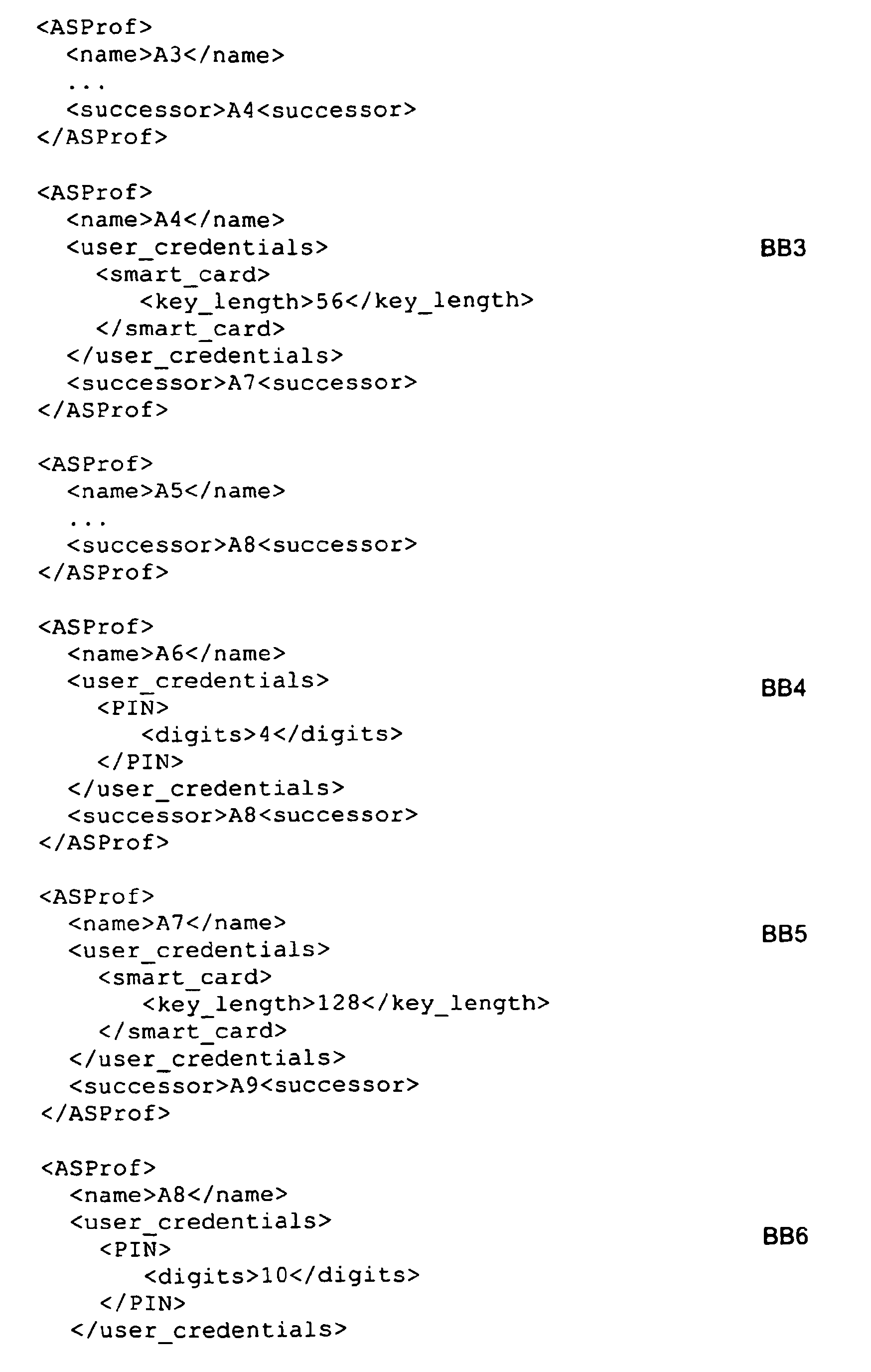

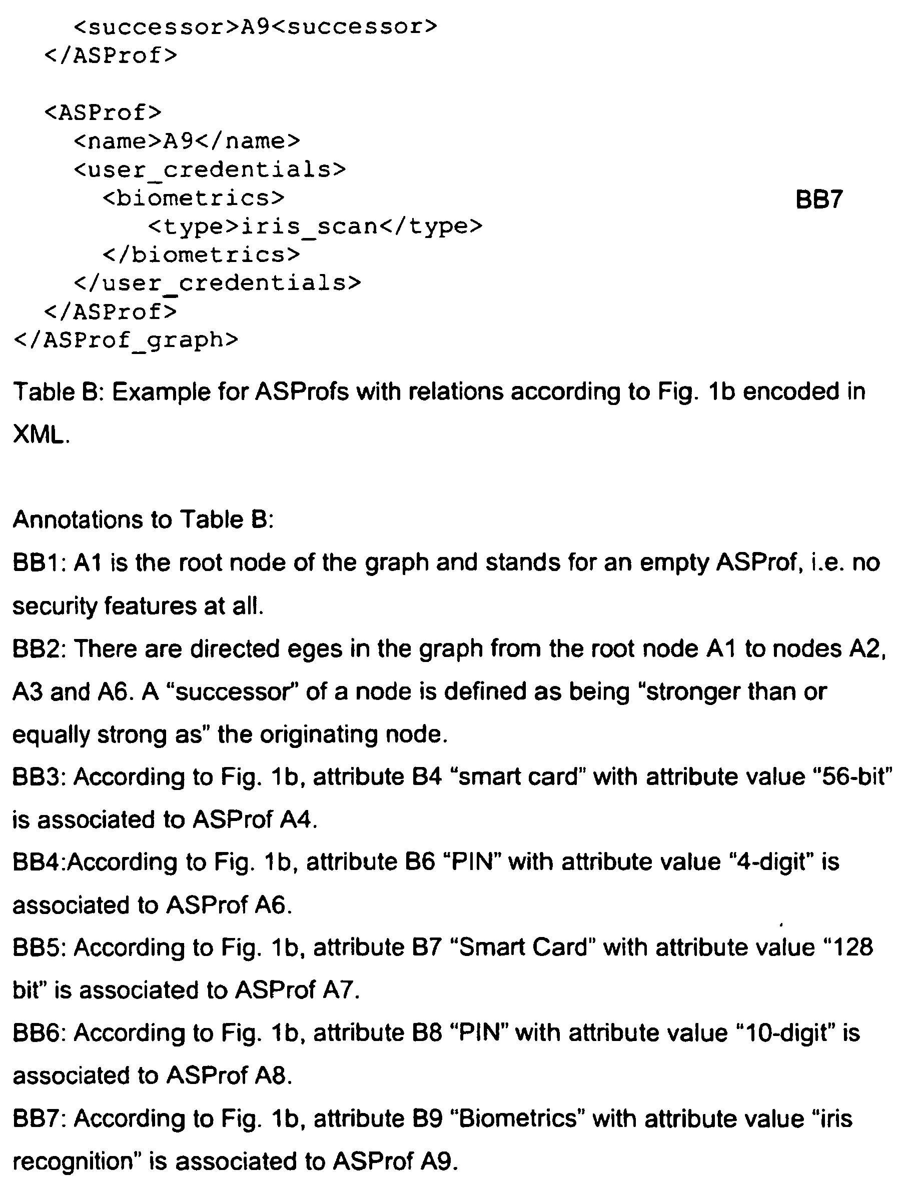

Also the attributes of an ASProf may have a hierarchical structure. For example, a "Key Length" attribute might have different interpretations, depending on whether the next higher level attribute specifies "TLS Tunnelling" or "WTLS". Therefore, the numeric values of the "Key Length" attribute cannot always be directly compared with each other without first having compared the next higher level attribute.

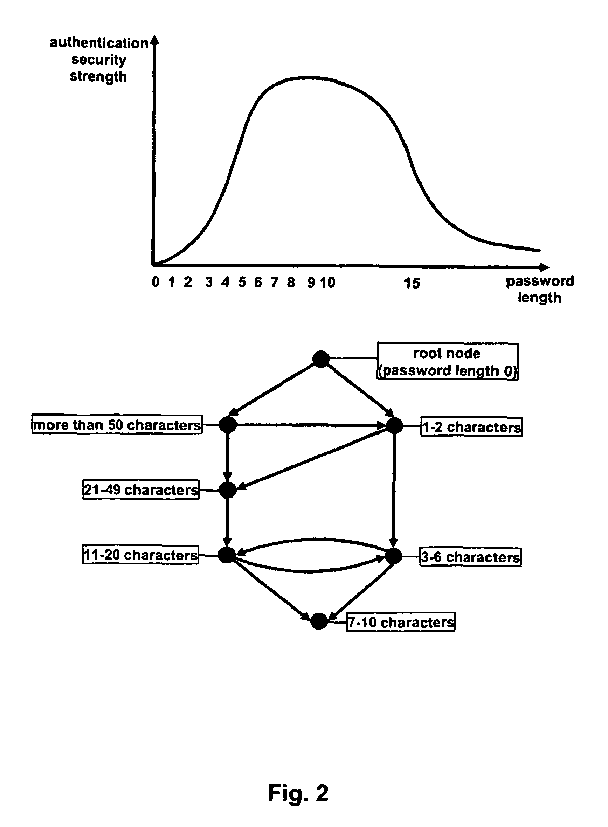

In the case of numeric attribute values, there does not need to be a monotonous relation between the attribute value and the authentication security strength in the sense that e.g. a larger key length always implies higher authentication security strength. Figure 2 shows an example for a non-monotonous relation: In the example, a password length of around 9 is perceived as optimal in terms of authentication security strength. Shorter passwords are considered less secure because they are easier to break, e.g. by means of a brute-force attack in the case of very short lengths and by means of a vocabulary attack for longer passwords. However, passwords much longer than 9 are also considered less secure because they are likely to be written down by the user since they are too hard to remember. The relation between the attribute value "password length" and the corresponding authentication security strength is shown in the upper part of Figure 2. The lower part shows how this mapping can be represented by means of a directed graph although other representations are conceivable. The relation between a first ASProf with attribute password length and a second ASProf with attribute password length is correspondingly expressed by arrows with an arrow now expressing a stronger (">") relation, i.e. a first ASProf is indicated to be stronger (">") than a second ASProf by an arrow starting at a second ASProf and ending with its arrowhead at the first ASProf. The first ASProf and the second ASProf are indicated to be of equal strength ("=") if an additional arrow starting at the first ASProf ends with its arrowhead at the second ASProf. For example, a "=" relation stating that the strength of two password lengths are equal is expressed by two arrows with one arrow pointing from the first password length to the second password length and a second arrow pointing from the second password length to the first password length. In this example, passwords having 11-20 characters are defined to be of equal authentication security strength as passwords with 3-6 characters.

In fact, it can be left completely to the service provider to decide about its own preferences and priorities, e.g. a first service provider may decide for a monotonous mapping and a further service provider may decide on a mapping according to Fig. 2, and a third service provider may accept a default graph by an identity provider without caring about the details of the mapping.

The example of Figure 2 illustrates how a non-monotonous relation can be represented in a directed graph. It further illustrates how ranges of attribute values, e.g. "7-10 characters", in the graph representation can be collapsed into a single node, i.e. there is no requirement that each allowed numeric value forms a separate node in the graph.

In the following, the authentication of a user to a service of a service provider SP by one or more identity providers is described:

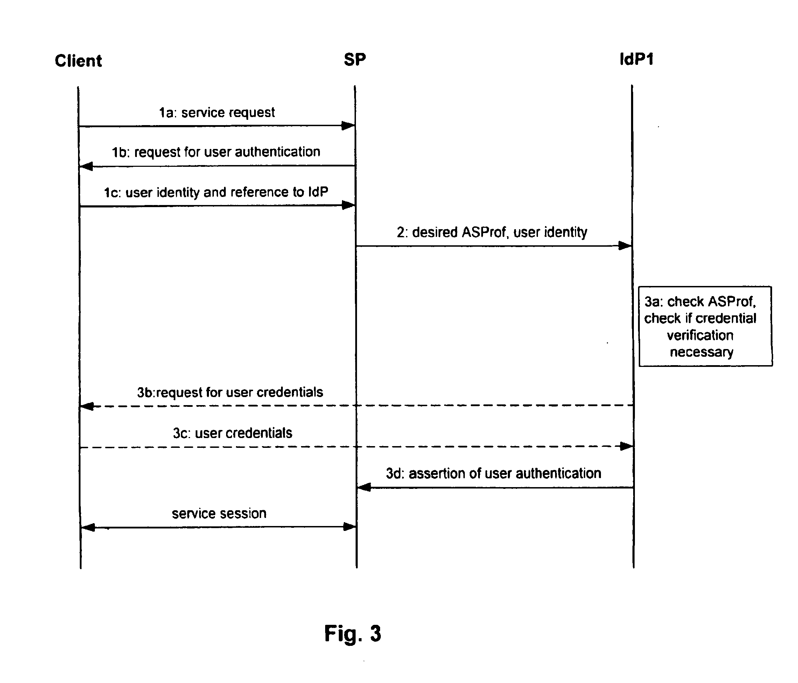

According to Fig. 3, a client contacts a service, provided by a service provider SP, that the user wants to invoke by sending via message **1a** a service request. The service requires a user authentication and the service provider SP sends via message **1b** a request for user authentication to the client. The client provides via message **1c** a user identity to the service provider SP that can verify the user identity. If the identity provider IdP1 for authentication of the client is unknown to the service provider SP, the client sends via message **1c** a reference to an identity provider IdP1, e.g. a Uniform Resource Identifier (URI), to the SP. Optionally, the reference to the identity provider IdP1 is send from the client to the service provider SP by default.

The service provider SP requests authentication of the user by sending via message **2** a desired ASProf specifying the authentication security requirements of the service and the user identity to the identity provider IdP1. Typically, the service provider SP and the identity provider IdP1 are setting up a secure session (e.g. using TLS) that provides confidentiality, integrity and authenticity of the information they exchange, as well as unilateral or mutual authentication between the service provider SP and the identity provider IdP1. Processes and messages that are necessary for any kind of encryption between any kind of entites involved in the proposed authentication method are not depicted in Fig.3 nor in the following figures.

The identity provider IdP1 checks in process **3a** whether or not it can meet the requirements set forth in the ASProf received from the SP. If the requirements can be met, the identity provider IdP1 can further check in process **3a** whether a verification of user credentials is required or not. If credential verification is necessary, a request **3b** for user credentials can be sent to the client, and the client can respond via message **3c** to that request **3b** by providing the requested user credentials. Both, in- and out-of-band communication is possible for the request **3b** and the corresponding response **3c**. Based on a positive result for the check of the requirements of the ASProf and of the optional credential verification, the identity provider IdP1 sends via message **3d** an assertion of the user authentication to the SP. Based on the assertion, the service provider SP can grant access to the client to access the requested service session.

As an example for verification of user credentials: A user has authenticated using a username/password mechanism to its favorite web portal at 9 am, via an IdP. At 11 am the user wants to access his profile at a service provider providing a service for Internet book sales with said service provider also accepting authentication assertions from the same IdP. If said service provider requires, in its ASProf, that the password entry may not be more than one hour old, the IdP needs to ask the user to re-enter a password before the user can be authenticated to said service provider. If, on the other hand, said service provider accepts password entries that are up to 24 hours old, there is no need for re-entering the password.

According to Fig. 3 and the description of Fig. 3, only one ASProf is sent from the service provider SP to the identity provider IdP1. However, the proposed method can be easily adapted to the case that multiple desired ASProfs are sent from the service provider SP to the identity provider IdP1. In this case, the service provider SP sends a "wish list" of ASProfs the service provider SP considers as sufficient for authentication of the client. The identity provider IdP1 checks the wish list. If one or more of the ASProfs of the wish list are supported by the identity provider IdP1, the identity provider IdP1 may select the one of the ASProfs that is supported best by the identity provider IdP1, e.g. where no credential verification is necessary or credential verification is less difficult compared to further supported ASProfs of the wish list.

The method described in conjunction with Fig. 3 uses a "back channel" message flow, involving a direct message exchange between the identity provider IdP1 and the SP. Alternatively, the method can be implemented using a "front channel" communication, i.e. any communication between the identity provider IdP1 and the service provider SP is relayed by the client preferably using appropriate security precautions so the client cannot tamper with the information passed back and forth. A combination of back channel and front channel for different messages is possible as well.

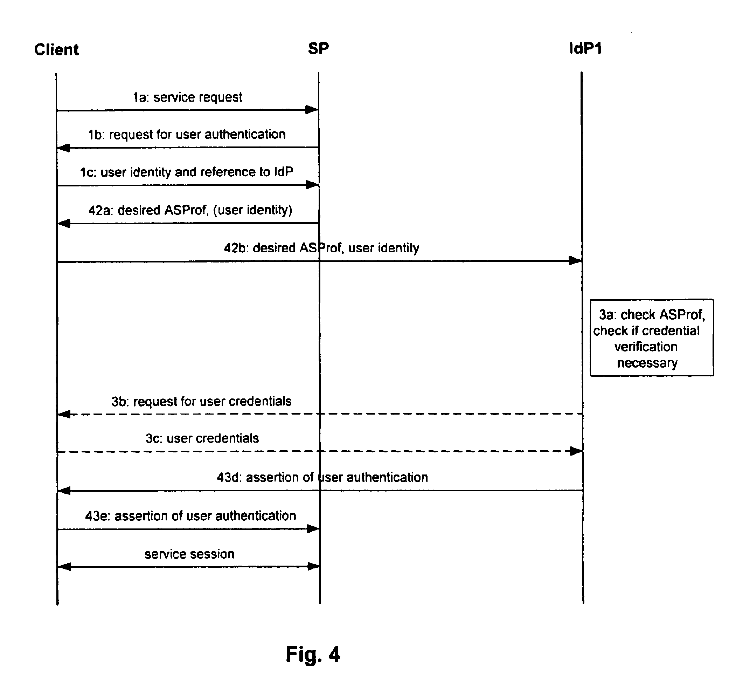

An example for a front channel communication is depicted in Fig. 4 for an authentication corresponding to Fig. 3. In front-channel communication, the desired ASProf and optionally the user identity are sent via message **42a** from the service provider SP to the client. The client sends via message **42b** the desired ASProf and the user identity to the identity provider IdP1. If the user identity is not provided by the service provider SP, the client obtains the user identity and sends it via message **42b** to the identity provider IdP1. As in Fig. 3, the identity provider IdP1 can check in process **3a** the received ASProf and if a credential verification is necessary. If so, the identity provider IdP1 can verify the user credentials using messages **3b,3c.** As in Fig. 3, messages 3b,3c are optional and in- or out-band communication may be utilized. The security assertion as given by the identity provider IdP1 is sent via messages **43d, 43e** via the client to the service provider SP. In this case, the security assertion can be considered as an authentication token or ticket.

In the case of a mobile client, a back-channel implementation has the advantage of avoiding communication between the service provider SP and the identity provider IdP1 over the air interface of the client. For front-channel communication, extra bandwidth is used and extra latency is caused on the air interface for the sole purpose of passing information back and forth between the service provider SP and the identity provider IdP1.

A front channel approach is common for fixed networks like the Internet and may be preferred compared to a back channel approach in order to reduce implementation effort. It has also the advantage that a session redirection takes place, i.e. the request to the service provider SP in **1c** of Fig. 4 is answered by a reply from the service provider SP in message **42a** and not as in the back channel case by a reply from an identity provider IdP1. This may cause the overall time needed for the authentication to be shorter than for back channel communication.

A hybrid implementation, e.g. using a proxy server, may also be possible in order to emulate a front channel for the communication between the service provider SP and the identity provider IdP1 while avoiding traffic via the client. A hybrid implementation may be therefore very useful for a mobile client.

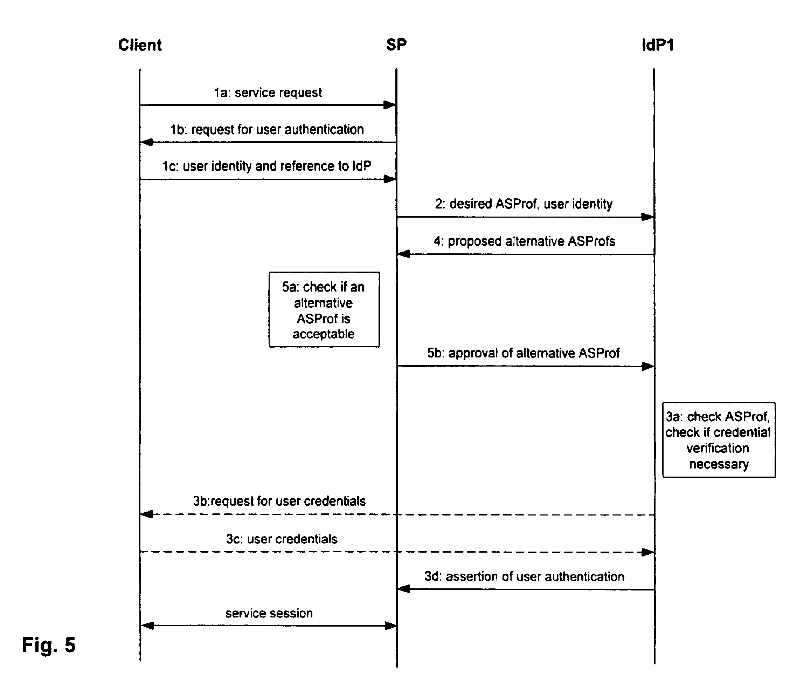

For the case, the identity provider IdP1 as described in conjunction with Fig. 3 does not support the desired one or more ASProfs sent from the service provider SP to identity provider IdP1, the identity provider IdP1 can provide the service provider SP with a counterproposal for the one or more desired ASProfs. According to Fig. 5, the service provider SP sends via message **2** a request for authentication comprising the desired ASProf and the user identity to the identity provider IdP1. The identity provider IdP1 checks the received desired ASProf and realizes that the desired ASProf is not supported. One or more alternative ASProfs are determined and sent via message **4** as proposed alternative ASProfs from the identity provider IdP1 to the SP. The service provider SP checks in process **5a** if at least one of the one or more proposed alternative ASProfs is acceptable. If none of the received proposed alternative ASProfs are acceptable, the service provider SP may send one or more further desired ASProfs to the identity provider IdP1 or may contact a further identity provider IdP1 for authentication or may terminate the authentication. If at least one of the one or more proposed alternative ASProfs is acceptable, the service provider SP sends via message **5b** an approval of the at least one proposed alternative ASProf to the identity provider IdP1. If multiple proposed alternative ASProfs are acceptable, the service provider SP may select one of the multiple ASProfs before sending the approval on the selected ASProf, e.g. the service provider SP may check the received one or more proposed alternative ASProfs and stops the checking after a first ASProf is found to be acceptable. This ASProf is approved by the service provider SP and an indication of the approval of this ASProf is sent to the identity provider IdP1. For the approved ASProf, the identity provider IdP1 proceeds with processes and messages **3a-3d** as described in conjunction with Fig. 3.

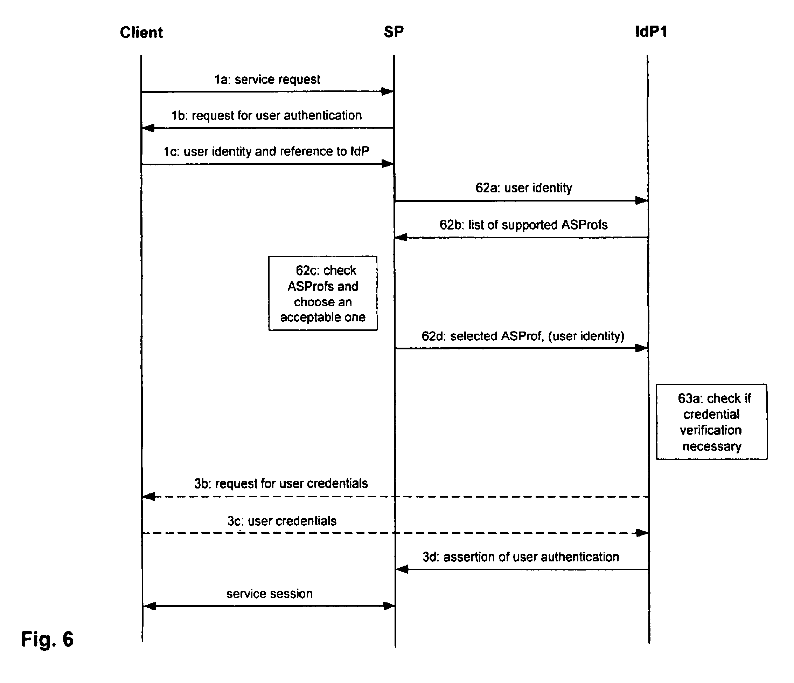

As described above in conjunction with Fig. 3-5, the service provider SP desires one or more ASProfs to be used by the identity provider IdP1 in the sense that the desired one or more ASProfs are sent to the identity provider IdP1. However, the service provider SP does not necessarily have to send the one or more desired ASProfs to the identity provider IdP1 in the request for authentication. Instead, the service provider SP can request a list of supported ASProfs from the identity provider IdP1. This is shown in Fig. 6. The service provider SP sends via message **62a** the user identity to the identity provider IdP1 and requests authentication. The identity provider IdP1 responds via message **62b** with a list of ASProfs supported by the identity provider IdP1. The list is checked in process **62c** by the service provider SP and an acceptable ASProf of the list is selected. The selected ASProf (as one example for an indication) or an indication of the selected ASProf is sent via message **62d** to the identity provider IdP1. The sending of the selected ASProf (as one example for an indication) or of the indication may be supplemented by the user identity for correlating the selected ASProf with the request for authentication sent via message **62a.** The identity provider IdP1 can check in process **63a** if a credential verification is necessary for the selected ASProf and proceeds with processes and messages according to **3b-3d** as described in conjunction with Fig. 3.

Sending of ASProfs can be achieved by sending individual ASProfs with or without relation revealing the level of security strength. Individual ASProfs or ASProfs and information on the relation between the ASProfs can be sent. For example, with respect to the graph notation as described in conjunction with Fig. 1 and 2, the full graph or parts of the graph like ASProfs and arrows can be sent. The sender, e.g. the service provider SP, of the ASProfs can specify which ASProfs are desired to be used by the receiver, e.g. the identity provider IdP1. Especially in the case that the receiver does not support any of the desired ASProfs, the receiver can navigate through the graph starting at the desired ASProfs to see whether it can support an ASProf that is recognized as equal or stronger than a desired ASProf if information on the relation between ASProfs is available at the receiver. When navigating through the graph or parts of the graph known to the receiver, the receiver can select at least one ASProf that is equal or stronger for meeting the requirements with respect to the strength of the ASProf as desired by the sender.

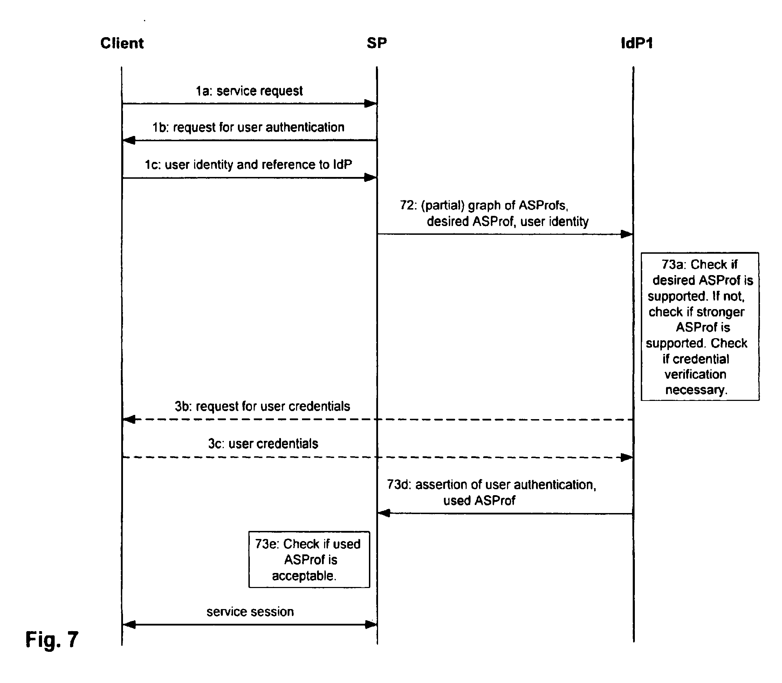

A corresponding example for a navigation is depicted in Fig. 7, wherein the service provider SP sends via message **72** a part of or the full ASProf graph, an indication for the desired ASProf, and the user identity to the identity provider IdP1 for authentication. Instead of sending the full graph, the service provider SP can send only that part of the graph comprising ASProfs being equal or stronger than the desired ASProf, e.g. in order to lower transmission effort or not to provide the identity provider IdP1 with information not usuable for this authentication. The identity provider IdP1 checks in process **73a** if the desired ASProf is supported. If it is not supported, the identity provider IdP1 checks in process **73a** if a stronger ASProf (as depicted in Fig. 7) or an ASProf of equal strength is supported by navigating the graph as received from the SP. If at least one ASProf being stronger or of equal strength different from the not supported desired ASProf is supported by the identity provider IdP1, the identity provider IdP1 may check in process **73a** for verification of user-credentials and request them from the user if necessary as described in conjunction with Fig. 3 (process and messages **3a-3c).** If an equal or stronger ASProf is used and optionally the user credentials are verified, the identity provider IdP1 sends via message **73d** an assertion of the user authentication preferably supplemented by an indication of the used equal or stronger ASProf to the identity provider IdP1. Before granting service access for the client, the service provider SP can check in process **73e** if the used ASProf is acceptable for the service provider SP, e.g. complies with the authentication security requirements of the service provider SP.

The transmission of the graph or parts of the graph as explained above makes the proposed method much more efficient in terms of the number of message roundtrips if the service provider SP and identity provider share - at least to a certain extent - similar ideas of what makes an ASProf stronger or equally strong compared to another ASProf, i.e. they share information on ASProfs and the relations between ASProfs with respect to authentication security strength. In addition, transmitting the graph has the advantage of minimizing the number of message round-trips between service provider SP and identity provider, thus making the authentication service much faster while still guaranteeing that the SPs security preferences and priorities are observed.

For example, if a service provider SP requests a key length of 128 bit, and the identity provider can only provide either 64 bit or 256 bit, then it is beneficial that the service provider SP and identity provider share the notion that a 256 bit key is accepted to be stronger by the service provider SP than a 128 bit key. If this notion is not shared, then additional messages need to be exchanged until the service provider SP and the identity provider can agree on an ASProf to be applied. Without the knowledge of the relation that a 256 bit key is stronger than 128 bit key, the identity provider sends for example an indication to the service provider SP that 128 bit keys are not supported. For this case, the service provider SP can respond with an alternative ASProf of 256 bit which is supported.

The shared notion of whether or not an ASProf is equal or stronger than another can be implicit or explicit. An example for an implicit agreement is the 128 bit vs. 256 bit case above meaning that 256 bit is generally understood to be stronger than 128 bit. The identity provider who cannot provide 128 bit uses 256 bit instead and communicates this fact to the service provider SP in the ASProf, assuming that the service provider SP will find 256 bit acceptable when the service provider SP has requested 128 bit. However, if the service provider SP has used a different definition of the strength of an ASProf than the identity provider, the wrong assumption of the identity provider leads to additional renegotiation and additional messages or termination of the authentication. An example where an explicit shared notation between the service provider SP and the identity provider is preferable compared to an implicit shared notation is given in Fig. 2 where the service provider SP defines a non-monotonous and not generally agreed upon relation between a numeric attribute and the perceived authentication security strength.

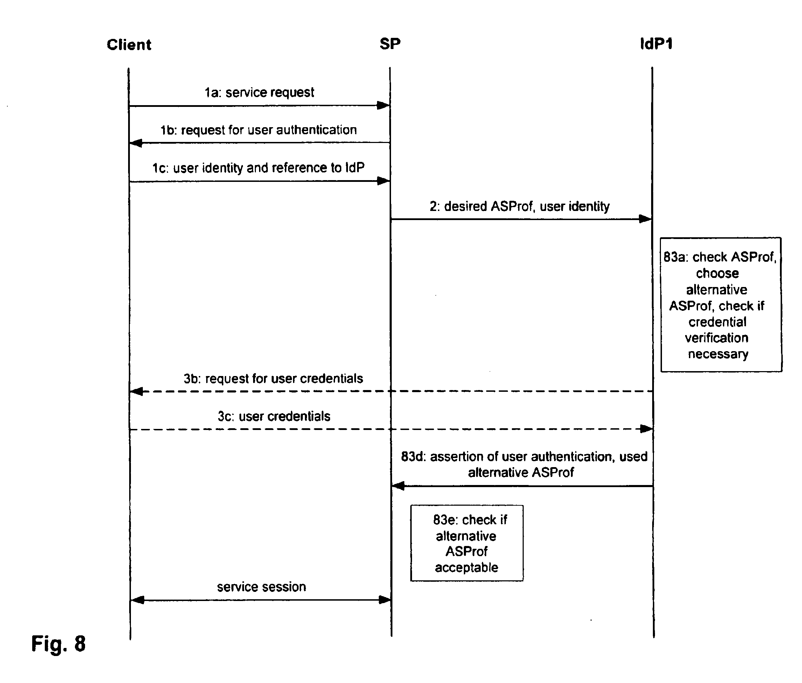

Fig. 8 shows an authentication where the service provider SP sends via message **2** a request for authentication comprising the desired ASProf and the user identity but without sending further information on a graph of the SP. The identity provider IdP1 does not support the desired ASProf and the identity provider IdP1 chooses an alternative ASProf as shown in process **83a.** The identity provider checks if a credential verification is necessary in process 83a. After an optional verification of user credentials using message **3b** and 3c according to the explanations given in conjunction with Fig. 3, the assertion of user authentication and an indication of the used alternative ASProf is sent via message **83d** to the SP. The service provider SP checks in process **83e** whether the alternative ASProf is acceptable or not. If the ASProf is acceptable, the service session may start. For choosing the alternative ASProf, the ASProf may use its own notation, e.g. by using an own graph or assuming an explicit notation. However, in order to avoid that the service provider SP finds the alternative ASProf unacceptable, the identity provider IdP1 uses preferably a notation shared between the service provider SP and the identity provider IdP1. A graph reflecting the ordering according to the service provider SP may be provided when registering the service provider SP to the authentication service provided by the identity provider IdP1. However, for ad-hoc scenarios where no further information than the desired ASProf and the user identity is available at the identity provider IdP1, the identity provider IdP1 may preferably uses its own notation, e.g. its own graph, or may request one or more supported ASProfs, e.g. in form of a graph, from the identity provider.

By associating ASProfs with relations, groups of ASProfs of can be created. For example, a number of ASProfs may be related by relating each pair of said number of ASProfs by = relations thus forming a group of ASProfs of equal authentication security strength, e.g. as indicated in Fig. 2 by the ASProfs with 3-6 and 11-20 characters forming a group of equal authentication security strength. The service provider can indicate to the identity provider to use any of the ASProfs belonging to a certain group for the authentication of the user by selecting one of the ASProfs belonging to that group and to send an indication of the selected ASProf to the identity provider for authentication of the user. If the identity provider is aware of the indicated group, e.g. due to the fact that information about the characteristics of the group, i.e. the ASProfs and their relations, is provided by the service provider SP to the IdP or vice versa, the identity provider can select one ASProf for authentication from the group based on the indication. A group identifier may be used for indication of the group to the identity provider if the service provider and the identity provovider share the same notation of the group. Individual groups may be ordered hierarchically, e.g. a first group comprising of a first number of ASProfs may be related to a second group of ASProfs and the identity provider may navigate from one group to another group for authentication. For checking if the ASProf based on which the authentication is executed matches to the authentication security requirements of the service provider, an indication of the group said authentication security profile is related to may be sufficient. Forming groups may have the advantage of a better scalability and manageability of authentication security profiles with comparable characteristics like comparable credential types or a comparable creation or validity periods.

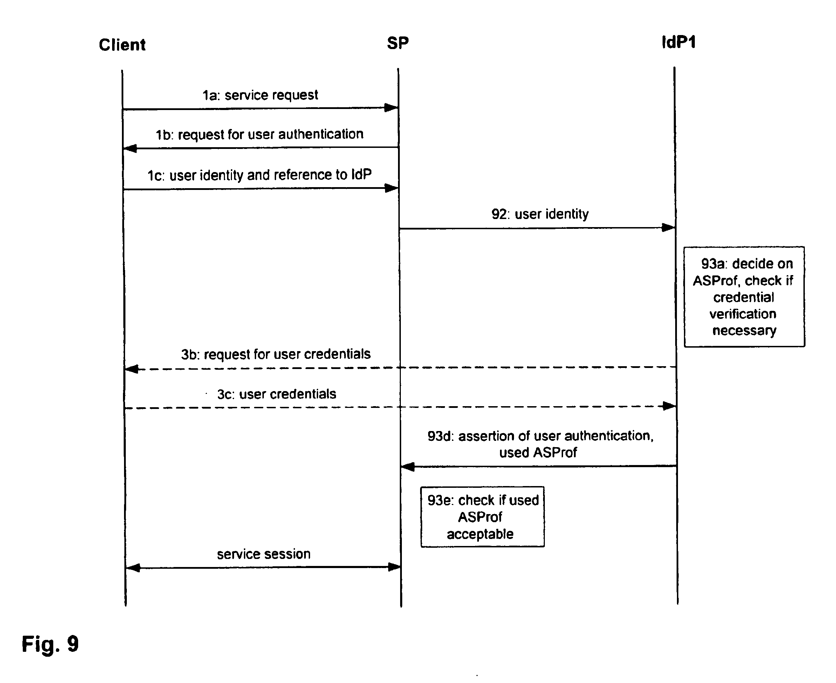

As an alternative authentication method, the service provider SP can ask for an authentication without specifying any ASProf. A corresponding scenario is depicted in Fig. 9. The service provider SP sends via message **62a** a request for authentication comprising a user identity to the identity provider IdP1. The identity provider IdP1 uses an ASProf of its own choice as indicated in process **93a** and optionally executes a credential verification according to the chosen ASProf by e.g. utilizing messages 3b,3c as explained in conjunction with Fig.3. Then, the identity provider IdP1 sends via message **93d** an indication of the used ASProf or, as an alternative form of an indication, the used ASProf itself to the service provider SP together with the assertion of authentication. The service provider SP then decides whether or not to accept the authentication, i.e. it is checked in process **93e** if the used ASProf is acceptable or not.

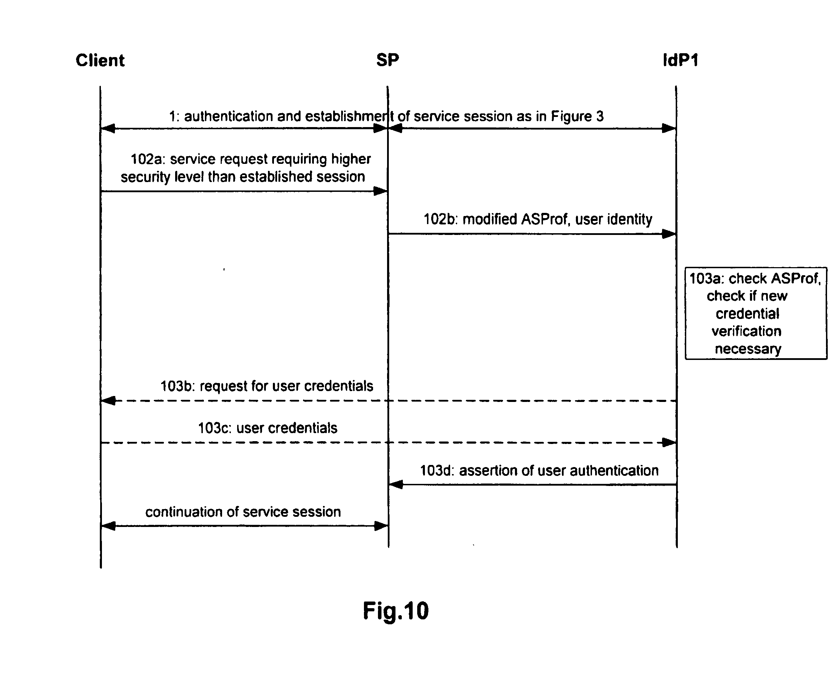

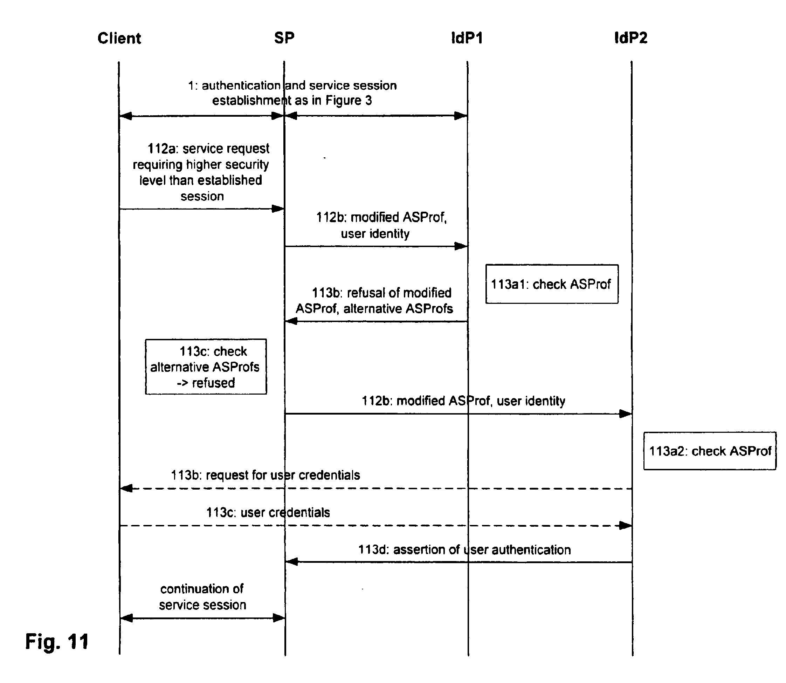

The method for upgrading a user authentication to a service provider SP by an identity provider during a service session is described in the following two figures 10 and 11. According to Fig. 10, a client participates in a service session. Establishment of the service session with a first authentication of the user to the service of the service provider may be achieved according to the description of Fig. 3 to 9. During the service session, the client accesses a service that requires a higher security level than the established session. An example for a higher security level is that a user can access his online bank account by means of a 5-digit PIN code. However, if the user in addition wants to authorize a monetary transaction from his bank account, an additional one-time password, or TAN, is required. Another example, a user can access his personalized web portal by means of a password. Some services on the portal may be subject to a fee. When the user clicks on such a service, an authentication using a smart-card reader attached to the user's PC may be required.

The service provider SP detects the service request sent via message **102a** from the client to the service provider SP and selects an ASProf, called in the following modified ASProf, meeting the tighter requirements, i.e. the modified ASProf is stronger as the ASProf used for first authentication. The service provider SP sends via message **102b** a request for authentication comprising the modified ASProf and the user identity to an identity provider not necessarily identical with an identity provider used for the first authentication. The identity provider IdP1 checks in process **103a** whether it is capable of meeting the stronger ASProf requirements. If it is, the identity provider IdP1 checks in process 103a whether this stronger ASProf requires a new verification of user credentials and performs via messages **103b,103c** this verification if necessary. As in Fig. 3, the optional messages **103b,103c** may be exchanged via in- or out-band communication. It is then proceeded as described as in conjunction with Figure 3 with respect to the assertion of the user authentication sent from the identity provider IdP1 to the service provider SP via message **103d.** Based on the assertion, the service provider SP can grant access to the service requiring the upgraded ASProf and the service session can be continued. Instead of sending the selected ASProf (as one form of an indication), an indication like a URI for the selected ASProf can be send, e.g. when the selected ASProf is known or accessible to the identity provider IdP1. If the ASProf used in the first authentication is known to the identity provider IdP1, the service provider SP may instead send an indication to use an ASProf stronger than the ASProf used in the first authentication. In this case, the identity provider IdP1 can execute the selection of the modified ASProf, e.g. by navigating a graph. Preferably, this modified ASProf used for the upgrade authentication is indicated to and approved by the service provider SP for upgrade authentication.

Fig. 11 shows the case where an authentication and a service session have been established by a first identity provider IdP1 and the client requests service access to a service requiring a higher security level than the established session. The service provider SP accordingly detects the service request sent via message **102a** requiring the higher security level and sends via message **102b** a request for authentication comprising the modified ASProf and the user identity to the first IdP. The first identity provider IdP1 checks in process **113a1** the received modified ASProf and detects that the modified ASProf is not supported. Accordingly, the first identity provider IdP1 sends a refusal via message **113b** of the modified ASProf and optionally alternative ASProfs that are supported by the first identity provider IdP1. The service provider SP can check in process **113c** the alternative ASProfs and may find them unacceptable. A response to the refusal may be sent to the first identity provider IdP1 for indicating that the authentication is terminated with respect to the first identity provider IdP1. At this point the service provider SP can terminate the authentication upgrade or can choose a second identity provider IdP2 for authentication upgrade. If a second identity provider IdP2 is available, a further request for authentication is sent via message **112b** to the second identity provider IdP2. The further request comprises the modified ASProf and a user identity being identical or not identical to the user identity used for the first authentication at the first identity provider IdP1. The second identity provider IdP2 checks in process **113a2** if the modified ASProf is supported. If the modified ASProf is supported, a verification of user credentials can be executed if necessary, e.g. by utilizing messages **113b, 113c** via in- or -out-band communication. An assertion of the user authentication is sent via message **113d** to the SP. Based on that assertion, the service provider SP can grant access to the service having tighter security requires and the service session can be continued.

Further exemplary upgrade scenarios are: A user is authenticated via a password by his Internet Service Provider (ISP) sometimes also named Internet Access Provider. At some point in time, the user wants to access a video streaming service which is subject to a fee and which requires stronger authentication, e.g. via a mobile phone (Subscriber Identity Module / Wireless Identification Module, SIM/WIM) as an authentication token. The service provider, i.e. the provider for the video service streaming service, first contacts the ISP for an authentication upgrade. The ISP since it typically does not manage SIM's and mobile phones, but probably only simple password lists cannot meet the tighter ASProf. It may propose a weaker ASProf to the service provider, but the service provider refuses. The service provider then contacts the user's mobile operator which can have been specified by the client in the initial service request as a potential identity provider. The mobile operator as an identity provider is capable of meeting the specified ASProf, i.e. requiring possession of a specific SIM/WIM as well as knowledge of a PIN-code. It sends the assertion of the stronger authentication to the service provider, so that the user may proceed using the streaming service.

It is not necessary to explicitly spell out the complete set of attributes of the ASProf every time whenever an ASProf is sent from an identity provider to a service provider or vice versa. Correspondingly, relations between ASProfs or even the full graph do not have to be sent in total. Instead, references (URI's) as well as updates can be used in order to reduce the amount of data being exchanged, as explained in the following.

An ASProf may consist of a sequence of fragments, each specifying one or more attributes, e.g. compare the XML description according to Table A with fragments relating to <user_ credentials>, <transport_layer_security> <security_policies>, and <user_registration>. Attributes from the individual fragments either complement each other, i.e. if they are only present in one fragment or override each other, i.e. if they are present in both fragments. In the case of overriding, a priority convention based on the order of the fragments needs to be specified, i.e. subsequent fragments override preceding ones, or vice versa.

A reference, e.g. preferably a URI, can be used to refer to an ASProf or to a fragment preferably representing a semantic subset of the full ASProf instead of explicitly spelling out all attributes of that ASProf or fragment. The use of references enables fetching and caching and can substantially reduce the amount of data being sent back and forth. For example, when a service provider frequently uses a certain identity provider that uses the same ASProf for a certain time period, there is no need for the ASProf to be explicitly exchanged between the service provider and the identity provider every time a new user is authenticated within said certain time period.

The use of updates of ASProfs in the sense of a delta updating relating to differences between existing ASProfs and newer ASProfs can further reduce the amount of data being exchanged. An update ASProf is a newer ASProf that either complements an existing ASProf or overrides some of its attributes. Also update fragments or update attributes are possible. For example, a user has been authenticated to a service provider by an identity provider using a password verification. For a certain user interaction, an authentication upgrade is required where the only difference to the previously used ASProf is that a shorter time-to-live for the password verification is specified. In this case, it is clearly more efficient to send a reference to the previously used ASProf, plus a single attribute specifying the deviating time-to-live attribute, as opposed to sending a reference to a new ASProf which the receiving party would have to fetch and cache completely.

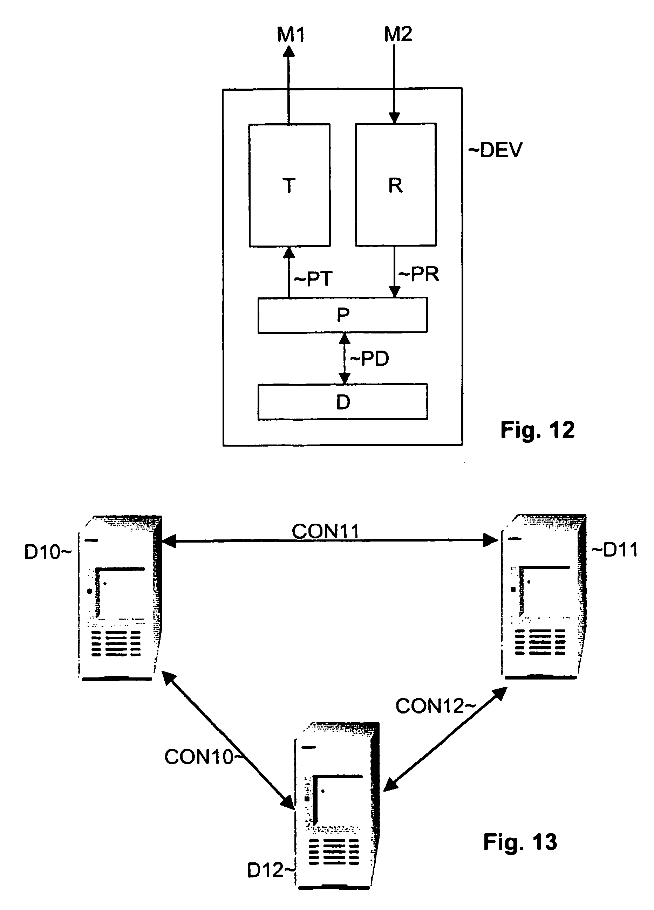

The proposed method is embodied also in devices like servers associated with a service provider, an identity provider, or proxy, or a client device. Such devices comprise at least a receiving unit R for receiving messages M2, a transmitting unit T for sending messages M1, and a processing unit P for processing of messages and information, and preferably a database D for storing information. An example for such a device is depicted in Fig. 12 showing the units R,T,P,D and messages M1,M2 and interconnections PR,PT,PD for exchanging information and messages between the individual units R,T,P,D. The device DEV is an example for a device that can be employed by the service provider, the identity provider, or the user as client device for implementing the method.

Examples for devices and links for exchanging messages and information between devices for executing the authentication method are given in Fig. 13, 14 and 15 for back channel, front channel, and hybrid back/front channel communication, respectively. The devices can be composed as depicted and described in conjunction with Fig. 12.

Fig. 13 shows a client D12, a service provider D10, and an identity provider D11 and links CON10, CON11, CON12 between the three parties for authentication of the client D12 to the service provider D10 via front channel communication. Communication between the client D12 and the service provider D10 is performed via link CON10, communication between the service provider D10 and the identity provider D11 is performed via link CON11, and communication between the identity provider D11 and the client D12 is performed via link CON12. Examples for information and messages exchanged between the three parties via link CON10, CON11, CON12 can be found for example in Fig. 3, i.e. service request (message **1a),** request for authentication (message **1b),** user identity and reference to identity provider (message **1c)** and service session via link CON10, the desired ASProf and user identity (message **2)** and the assertion of the user authentication (message **3d)** via link CON11, and request for user credentials (message **3b)** and the delivery of the user credentials (message **3c**) via link CON12. The links CON10, CON11, CON12 can be but do not need to be stationary connections, e.g. link CON12 may be achieved via Short Message Services (SMS) if the client D12 is a mobile phone.

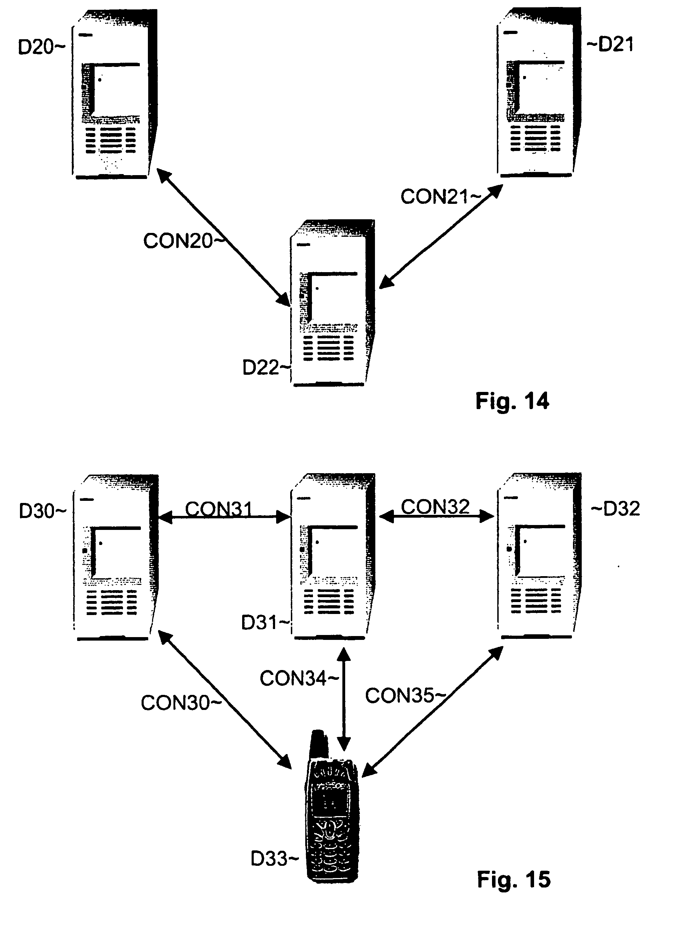

Fig. 14 shows a client D22, a service provider D20, and an identity provider D21 and links CON20, CON21 between the three parties for authentication of the client D22 to the service provider D20 via front channel communication. In contrast to Fig. 11, no direct link exists between the service provider D20 and the identity provider D21. Instead, communication between the service provider D20 and the identity provider D21 is achieved via the client D22 in the sense that the information to be exchanged between the service provider D20 and the identity provider D21 is relayed by the client D22. Examples for information and messages exchanged between the three parties via link CON20 and CON21 can be found in Fig. 4, i.e. service request (message **1a),** request for authentication (message **1b),** user identity and reference to identity provider (message **1c),** and service session are sent via link CON20. Correspondingly, the request for user credentials (3b) and the user credentials is sent via link CON21. However, the desired ASProf and the user identity comprised in the request for authentication (messages **42a,42b**) are sent from the service provider D20 via the client D22 to the identity provider D21 via links CON20 and CON21. A corresponding relaying is achieved for the assertion of the user authentication (messages **43d,43e**) sent from the identity provider D21 to the service provider D20 via the client D22 via links CON21 and CON20.

Fig. 15 shows a hybrid implementation using a proxy D31 for emulating front channel implementation. For authentication of the user of the client D33 to a service of the service provider D30, the client D33 sends a service request to the service provider D30 via link CON30. The service provider D30 responds with a request for user authentication to the client via link C30 and the client D33 provides the service provider D30 with the user identity and optionally a reference to the identity provider D32 via link CON30. For communication between the service provider D30 and the identity provider D32, e.g. for sending the user identity and the desired ASProf or for the assertion of user authentication, a proxy D31 is interposed between the service provider D30 and the identity provider D32. Information from the service provider D30 to the identity provider D32 and vice versa can be sent via the proxy D31 using the connections CON31 and CON32. For the request of user credentials and the delivery of user credentials, link CON35 may be used. Alternatively, link CON32 and link CON34 can be used for the request and the delivery of user credentials. Further information may be exchanged between the proxy D31 and the client D33 via link CON34.

The method according to the invention is embodied also in one or more computer programs loadable to devices associated to a service provider, identity provider, proxy, or client. The one or more computer programs comprise portions of software codes in order to implement the method as described above. The one or more computer programs can be stored on a computer readable medium. The computer-readable medium can be a permanent or rewritable memory within a server or a server or located externally. The computer program can be also transferred to a server for example via a cable or a wireless link as a sequence of signals.

The proposed method can be adapted to be used in 2G and 3G mobile telecommunication systems like GPRS and UMTS, respectively. It can also be applied for authentication to services in fixed networks like the Internet and combinations of fixed and wireless networks including Wireless Local Area Networks (WLAN).Mobile and stationary client terminals can be employed by the user. The servers associated to a service provider, identity provider, or proxy typically are stationary in a network. However, the proposed method can be applied for moving, non-stationary servers. Examples for servers are Personal Computers (PCs) or laptop computers.

In the following, some of the advantages of the invention are summarized:

Rather than having fixed relationships between service providers and identity providers with static authentication security policies, the invention can provide ad-hoc negotiation and upgrading of authentication security profiles. For ad-hoc negotiation, no prior agreement between a service provider and identity provider about ASProfs is required.

Furthermore, different types of services and transactions can have very different requirements on the certainty of knowing that a user is who he claims to be. Likewise, different authentication mechanisms and security infrastructures provide different levels of certainty. The proposed method supports these different levels of certainty thus overcoming restrictions common with binary authentication concepts.

Another advantage is that the invention provides a flexible model that allows for on-the-fly changes of policies both on the service provider and on the identity provider side. If policies and security features change, out-of-band communication between service provider and the identity provider can be minimized.

Furthermore, the authentication method allows to handle complex specifications of ASProfs, i.e. different types of attributes like fingerprint recognition and password can be compared with respect to authentication security strength. Furthermore, also combinations of different attributes can be negotiated making the proposed method even more versatile.

Also, the authentication method empowers the service respectively the service provider to act as the policy decision and policy enforcement point taking in the end the decision on the authentication. For this service provider friendly case, the proposed invention can be implemented such that the identity provider provides the service of validating user credentials and the identity provider is preferably only involved in session establishment or for authentication updates. Not further requiring the identity provider during a session, consequently reduces the load of the identity provider and the complexity of its session management, and improves scalability compared to prior art authentication methods with an intermediate identity provider.

## Claims

1. Method for an authentication of a user to a service of a service provider (SP), comprising the steps of
- Requesting access for the user to the service of the service provider (SP),
- Selecting by the service provider (SP) one or more authentication security profiles comprising at least one security attribute for specifying an authentication security requirement for the authentication of the user to the service,
- Sending an indication of the one or more selected authentication security profiles and a user identity identifying the user to an identity provider (IdP1) for requesting the authentication of the user by the identity provider (IdP1),
- Authenticating the user based on the user identity and one of the one or more selected authentication security profiles, and
- Sending an assertion indicating the authentication of the user to the service provider (SP).

2. The method according to claim 1, wherein said one authentication security profile based on which the authentication is executed is selected by the identity provider (IdP1) from the selected authentication security profiles.

3. The method according to claims 1 or 2, wherein the assertion is supplemented by an indication of the authentication security profile based on which the authentication is executed and the indicated authentication security profile is checked by the service provider (SP) for acceptance.

4. A method for an authentication of a user to a service of a service provider (SP), comprising the steps of
- Requesting access for the user to the service of the service provider (SP),
- Sending a user identity identifying the user to an identity provider (IdP1) for requesting the authentication of the user by the identity provider (IdP1),
- Authenticating the user based on the user identity and an authentication security profile comprising at least one security attribute,
- Sending an assertion indicating the authentication of the user to the service provider (SP), the assertion being supplemented by an indication of the authentication security profile, and
- Checking by the service provider (SP) the indicated authentication security profile for acceptance.

5. The method according to any of the preceding claims, further comprising the step of receiving at the service provider (SP) from a user device the user identity and a reference to the identity provider (IdP1) in response to a request for authentication sent from the service provider (SP) to the user device.

6. The method according to any of the preceding claims, further comprising the step of granting access to the service based on the assertion.

7. The method according to any of the claims 3 to 5 , further comprising the step of granting access to the service based on the assertion and the check for acceptance.

8. A device associated to a service provider (SP), the device comprising a receiving unit for receiving messages, a transmitting unit for sending messages, and a processing unit for processing messages and information, wherein the device is adapted to
- receive a request for access of a user to a service of the service provider (SP),
- select one or more authentication security profiles comprising at least one security attribute for specifying an authentication security requirement for an authentication of the user to the service,
- send an indication of the one or more selected authentication security profiles and a user identity identifying the user to an identity provider (IdP1) for requesting the authentication of the user by the identity provider (IdP1), and
- to receive an assertion indicating the authentication of the user by the identity provider (IdP1).

9. The device according to claim 8, wherein the device is adapted to receive an indication of the authentication security profile based on which the authentication of the user is executed by the identity provider (IdP1) and the device is further adapted to check the indicated authentication security profile for acceptance.

10. A device associated to a service provider (SP), the device comprising a receiving unit for receiving messages, a transmitting unit for sending messages, and a processing unit for processing messages and information, wherein the device is adapted to
- receive a request for access of a user to a service of the service provider (SP),
- send a user identity identifying the user to an identity provider (IdP1) for requesting an authentication of the user by the identity provider (IdP1),
- receive an assertion indicating the authentication of the user from the identity provider (IdP1), the assertion being supplemented by an indication of the authentication security profile comprising at least one security attribute, and
- check the indicated authentication security profile for acceptance.

11. The device according to any of the claims 8 to 10, wherein the device is adapted to receive the user identity and a reference to the identity provider (IdP1) from a user device in response to a request for authentication sent from the device associated to the service provider (SP) to the user device.

12. The device according to any of the claims 8 to 11, wherein the device is adapted to grant access to the service based on the assertion.

13. The device according to any of the claims 9 to 11, wherein the device is adapted to grant access to the service based on the assertion and the check for acceptance.

14. A device associated to an identity provider (IdP1), the device comprising a receiving unit for receiving messages, a transmitting unit for sending messages, and a processing unit for processing messages and information, wherein the device is adapted to
- receive a request for an authentication of a user, the request comprising a user identity identifying the user to the identity provider (IdP1) and an indication for one or more authentication security profiles comprising at least one security attribute specifying an authentication security requirement of the service provider (SP) for the authentication of the user to a service of the service provider (SP),
- authenticate the user based on the user identity and one of the one or more authentication security profiles, and
- send an assertion indicating to the service provider (SP) the authentication of the user.

15. The device according to claim 14, wherein the device is adapted to select said one authentication security profile based on which the authentication is executed from the authentication security profiles.

16. The device according to claims 14 or 15, wherein the device is adapted to supplement the assertion with an indication of the authentication security profile based on which the authentication is executed.

17. A device associated to an identity provider (IdP1), the device comprising a receiving unit for receiving messages, a transmitting unit for sending messages, and a processing unit for processing messages and information, wherein the device is adapted to
- receive a request for an authentication of a user, the request comprising a user identity identifying the user to the identity provider (IdP1),
- authenticate the user based on the user identity and an authentication security profile comprising at least one security attribute, and
- send an assertion indicating to the service provider (SP) the authentication of the user, the assertion being supplemented by an indication of the authentication security profile based on which the authentication of the user is executed.

18. A computer program loadable into a device associated to a service provider (SP), the computer program comprising code adapted to execute the steps of the method according to any of the claims 1 to 7 as far as related to the service provider (SP).

19. A computer program loadable into a device associated to an identity provider (IdP1), the computer program comprising code adapted to execute the steps of the method according to any of the claims 1 to 7 as far as related to the identity provider (IdP1).

## Patentansprüche

1. Verfahren zur Authentifizierung eines Benutzers bei einem Dienst eines Diensteanbieters (SP), welches die folgenden Schritte umfasst:
- Anfordern eines Zugangs für den Benutzer zu dem Dienst des Diensteanbieters (SP),
- Auswählen eines oder mehrerer Authentifizierungs-Sicherheitsprofile durch den Diensteanbieter (SP), welche wenigstens ein Sicherheitsattribut zum Spezifizieren einer Authentifizierungs-Sicherheitsanforderung für die Authentifizierung des Benutzers bei dem Dienst umfassen,
- Senden einer Angabe des einen oder der mehreren ausgewählten Authentifizierungs-Sicherheitsprofile und einer Benutzerkennung, die den Benutzer identifiziert, an einen Identitätsanbieter (IdP1) zum Anfordern der Authentifizierung des Benutzers durch den Identitätsanbieter (IdP1),
- Authentifizieren des Benutzers auf der Basis der Benutzerkennung und eines des einen oder der mehreren ausgewählten Authentifizierungs-Sicherheitsprofile, und
- Senden einer Assertion, welche die Authentifizierung des Benutzers anzeigt, an den Diensteanbieter (SP).

2. Verfahren nach Anspruch 1, wobei das eine Authentifizierungs-Sicherheitsprofil, auf dessen Basis die Authentifizierung ausgeführt wird, von dem Identitätsanbieter (IdP1) aus den ausgewählten Authentifizierungs-Sicherheitsprofilen ausgewählt wird.

3. Verfahren nach Anspruch 1 oder 2, wobei die Assertion durch eine Angabe des Authentifizierungs-Sicherheitsprofils ergänzt wird, auf dessen Basis die Authentifizierung ausgeführt wird, und wobei das angegebene Authentifizierungs-Sicherheitsprofil von dem Diensteanbieter (SP) auf Akzeptanz geprüft wird.

4. Verfahren zur Authentifizierung eines Benutzers bei einem Dienst eines Diensteanbieters (SP), welches die folgenden Schritte umfasst:
- Anfordern eines Zugangs für den Benutzer zu dem Dienst des Diensteanbieters (SP),
- Senden einer Benutzerkennung, die den Benutzer identifiziert, an einen Identitätsanbieter (IdP1) zum Anfordern der Authentifizierung des Benutzers durch den Identitätsanbieter (IdP1),
- Authentifizieren des Benutzers auf der Basis der Benutzerkennung und eines Authentifizierungs-Sicherheitsprofils, das wenigstens ein Sicherheitsattribut umfasst,
- Senden einer Assertion, welche die Authentifizierung des Benutzers anzeigt, an den Diensteanbieter (SP), wobei die Assertion durch eine Angabe des Authentifizierungs-Sicherheitsprofils ergänzt wird, und
- Prüfen des angegebenen Authentifizierungs-Sicherheitsprofils durch den Diensteanbieter (SP) auf Akzeptanz.

5. Verfahren nach einem der vorhergehenden Ansprüche, welches ferner den Schritt des Empfangens der Benutzerkennung und eines Verweises auf den Identitätsanbieter (IdP1) von einer Benutzervorrichtung, in Reaktion auf eine von dem Diensteanbieter (SP) an die Benutzervorrichtung gesendete Authentifizierungsaufforderung, bei dem Diensteanbieter (SP) umfasst.

6. Verfahren nach einem der vorhergehenden Ansprüche, welches ferner den Schritt des Gewährens eines Zugangs zu dem Dienst auf der Basis der Assertion umfasst.

7. Verfahren nach einem der Ansprüche 3 bis 5, welches ferner den Schritt des Gewährens eines Zugangs zu dem Dienst auf der Basis der Assertion und der Prüfung auf Akzeptanz umfasst.

8. Vorrichtung, die einem Diensteanbieter (SP) zugeordnet ist, wobei die Vorrichtung eine Empfangseinheit zum Empfangen von Nachrichten, eine Sendeeinheit zum Senden von Nachrichten und eine Verarbeitungseinheit zum Verarbeiten von Nachrichten und Informationen umfasst, wobei die Vorrichtung in der Lage ist,
- eine Anforderung eines Zugangs eines Benutzers zu einem Dienst des Diensteanbieters (SP) zu empfangen,
- ein oder mehrere Authentifizierungs-Sicherheitsprofile auszuwählen, welche wenigstens ein Sicherheitsattribut zum Spezifizieren einer Authentifizierungs-Sicherheitsanforderung für eine Authentifizierung des Benutzers bei dem Dienst umfassen,
- eine Angabe des einen oder der mehreren ausgewählten Authentifizierungs-Sicherheitsprofile und eine Benutzerkennung, die den Benutzer identifiziert, an einen Identitätsanbieter (IdP1) zum Anfordern der Authentifizierung des Benutzers durch den Identitätsanbieter (IdP1) zu senden, und
- eine Assertion zu empfangen, welche die Authentifizierung des Benutzers durch den Identitätsanbieter (IdP1) anzeigt.

9. Vorrichtung nach Anspruch 8, wobei die Vorrichtung in der Lage ist, eine Angabe des Authentifizierungs-Sicherheitsprofils zu empfangen, auf dessen Basis die Authentifizierung des Benutzers durch den Identitätsanbieter (IdP1) ausgeführt wird, und wobei die Vorrichtung ferner in der Lage ist, das angegebene Authentifizierungs-Sicherheitsprofil auf Akzeptanz zu prüfen.

10. Vorrichtung, die einem Diensteanbieter (SP) zugeordnet ist, wobei die Vorrichtung eine Empfangseinheit zum Empfangen von Nachrichten, eine Sendeeinheit zum Senden von Nachrichten und eine Verarbeitungseinheit zum Verarbeiten von Nachrichten und Informationen umfasst, wobei die Vorrichtung in der Lage ist,
- eine Anforderung eines Zugangs eines Benutzers zu einem Dienst des Diensteanbieters (SP) zu empfangen,
- eine Benutzerkennung, die den Benutzer identifiziert, an einen Identitätsanbieter (IdP1) zum Anfordern einer Authentifizierung des Benutzers durch den Identitätsanbieter (IdP1) zu senden,
- eine Assertion, welche die Authentifizierung des Benutzers anzeigt, von dem Identitätsanbieter (IdP1) zu empfangen, wobei die Assertion durch eine Angabe des Authentifizierungs-Sicherheitsprofils ergänzt wird, das wenigstens ein Sicherheitsattribut umfasst, und
- das angegebene Authentifizierungs-Sicherheitsprofi auf Akzeptanz zu prüfen.

11. Vorrichtung nach einem der Ansprüche 8 bis 10, wobei die Vorrichtung in der Lage ist, von einer Benutzervorrichtung in Reaktion auf eine von der dem Diensteanbieter (SP) zugeordneten Vorrichtung an die Benutzervorrichtung gesendete Authentifizierungsaufforderung die Benutzerkennung und einen Verweis auf den Identitätsanbieter (IdP1) zu empfangen.

12. Vorrichtung nach einem der Ansprüche 8 bis 11, wobei die Vorrichtung in der Lage ist, auf der Basis der Assertion einen Zugang zu dem Dienst zu gewähren.

13. Vorrichtung nach einem der Ansprüche 9 bis 11, wobei die Vorrichtung in der Lage ist, auf der Basis der Assertion und der Prüfung auf Akzeptanz einen Zugang zu dem Dienst zu gewähren.

14. Vorrichtung, die einem Identitätsanbieter (IdP1) zugeordnet ist, wobei die Vorrichtung eine Empfangseinheit zum Empfangen von Nachrichten, eine Sendeeinheit zum Senden von Nachrichten und eine Verarbeitungseinheit zum Verarbeiten von Nachrichten und Informationen umfasst, wobei die Vorrichtung in der Lage ist,
- eine Aufforderung zur Authentifizierung eines Benutzers zu empfangen, wobei die Aufforderung umfasst: eine Benutzerkennung, die den Benutzer für den Identitätsanbieter (IdP1) identifiziert, und eine Angabe eines oder mehrerer Authentifizierungs-Sicherheitsprofile, die wenigstens ein Sicherheitsattribut umfassen, das eine Authentifizierungs-Sicherheitsanforderung des Diensteanbieters (SP) für die Authentifizierung des Benutzers bei einem Dienst des Diensteanbieters (SP) spezifiziert,
- den Benutzer auf der Basis der Benutzerkennung und eines des einen oder der mehreren Authentifizierungs-Sicherheitsprofile zu authentifizieren, und
- eine Assertion, welche dem Diensteanbieter (SP) die Authentifizierung des Benutzers anzeigt, zu senden.

15. Vorrichtung nach Anspruch 14, wobei die Vorrichtung in der Lage ist, das eine Authentifizierungs-Sicherheitsprofil, auf dessen Basis die Authentifizierung ausgeführt wird, aus den Authentifizierungs-Sicherheitsprofilen auszuwählen.

16. Vorrichtung nach Anspruch 14 oder 15, wobei die Vorrichtung in der Lage ist, die Assertion durch eine Angabe des Authentifizierungs-Sicherheitsprofils, auf dessen Basis die Authentifizierung ausgeführt wird, zu ergänzen.

17. Vorrichtung, die einem Identitätsanbieter (IdP1) zugeordnet ist, wobei die Vorrichtung eine Empfangseinheit zum Empfangen von Nachrichten, eine Sendeeinheit zum Senden von Nachrichten und eine Verarbeitungseinheit zum Verarbeiten von Nachrichten und Informationen umfasst, wobei die Vorrichtung in der Lage ist,
- eine Aufforderung zur Authentifizierung eines Benutzers zu empfangen, wobei die Aufforderung eine Benutzerkennung umfasst, die den Benutzer für den Identitätsanbieter (IdP1) identifiziert,
- den Benutzer auf der Basis der Benutzerkennung und eines Authentifizierungs-Sicherheitsprofils, das wenigstens ein Sicherheitsattribut umfasst, zu authentifizieren, und
- eine Assertion, welche dem Diensteanbieter (SP) die Authentifizierung des Benutzers anzeigt, zu senden, wobei die Assertion durch eine Angabe des Authentifizierungs-Sicherheitsprofils ergänzt wird, auf dessen Basis die Authentifizierung des Benutzers ausgeführt wird.

18. Computerprogramm, das auf eine Vorrichtung geladen werden kann, die einem Diensteanbieter (SP) zugeordnet ist, wobei das Computerprogramm Code umfasst, der dazu geeignet ist, die Schritte des Verfahrens nach einem der Ansprüche 1 bis 7 auszuführen, soweit sie den Diensteanbieter (SP) betreffen.

19. Computerprogramm, das auf eine Vorrichtung geladen werden kann, die einem Identitätsanbieter (IdP1) zugeordnet ist, wobei das Computerprogramm Code umfasst, der dazu geeignet ist, die Schritte des Verfahrens nach einem der Ansprüche 1 bis 7 auszuführen, soweit sie den Identitätsanbieter (IdP1) betreffen.

## Revendications

1. Procédé d'authentification d'un utilisateur à un service d'un fournisseur de services (SP) comprenant les étapes consistant à
- Demander l'accès de l'utilisateur au service du fournisseur de services (SP),
- Sélectionner par le fournisseur de services (SP) un ou plusieurs profils de sécurité d'authentification comprenant au moins un attribut de sécurité pour spécifier une exigence de sécurité d'authentification en vue de l'authentification de l'utilisateur au service,
- Envoyer une indication d'un ou plusieurs profils de sécurité d'authentification sélectionnés et une identité d'utilisateur identifiant l'utilisateur chez un fournisseur d'identité (IdP1) pour demander l'authentification de l'utilisateur par le fournisseur d'identité (IdP1),
- Authentifier l'utilisateur sur la base de l'identité d'utilisateur et un des un ou plusieurs profils de sécurité d'authentification sélectionnés, et
- Envoyer une affirmation indiquant l'authentification de l'utilisateur au fournisseur de services (SP).

2. Procédé selon la revendication 1, dans lequel un dit profil de sécurité d'authentification sur la base duquel l'authentification est exécutée est sélectionné par le fournisseur d'identité (IdP1) à partir des profils de sécurité d'authentification.

3. Procédé selon les revendications 1 ou 2, dans lequel l'affirmation est complétée par une indication du profil de sécurité d'authentification sur la base duquel l'authentification est exécutée et le profil de sécurité d'authentification indiqué est vérifié par le fournisseur de services (SP) en vue de l'acceptation.

4. Procédé d'authentification d'un utilisateur à un service d'un fournisseur de services (SP) comprenant les étapes consistant à
- Demander l'accès de l'utilisateur au service du fournisseur de services (SP),
- Envoyer une identité d'utilisateur identifiant l'utilisateur à un fournisseur d'identité (IdP1) pour demander l'authentification de l'utilisateur par le fournisseur d'identité (IdP1),
- Authentifier l'utilisateur sur la base de l'identité d'utilisateur et d'un profil de sécurité d'authentification comprenant au moins un attribut de sécurité,
- Envoyer une affirmation indiquant l'authentification de l'utilisateur au fournisseur de services (SP), l'affirmation étant complétée par une indication du profil de sécurité d'authentification, et
- Vérifier par le fournisseur de services (SP) le profil de sécurité d'authentification indiqué en vue d'une acceptation.

5. Procédé selon l'une quelconque des revendications précédentes, comprenant en outre l'étape consistant à recevoir au niveau du fournisseur de services (SP) en provenance d'un dispositif d'utilisateur l'identité d'utilisateur et une référence au fournisseur d'identité (IdP1) en réponse à une demande d'authentification envoyée depuis le fournisseur de services (SP) au dispositif d'utilisateur.

6. Procédé selon l'une quelconque des revendications précédentes, comprenant en outre l'étape consistant à accorder l'accès au service sur la base de l'affirmation.

7. Procédé selon l'une quelconque des revendications 3 à 5, comprenant en outre l'étape consistant à accorder l'accès au service sur la base de l'affirmation et de la vérification en vue d'une acceptation.

8. Dispositif associé à un fournisseur de services (SP), le dispositif comprenant une unité de réception pour recevoir des messages, une unité de transmission pour envoyer des messages et une unité de traitement pour traiter des messages et des informations, moyennant quoi le dispositif est adapté afin de
- recevoir une demande d'accès d'un utilisateur à un service du fournisseur de services (SP),
- sélectionner un ou plusieurs profils de sécurité d'authentification comprenant au moins un attribut de sécurité pour spécifier une exigence de sécurité d'authentification en vue d'une authentification de l'utilisateur au service,
- envoyer une indication de un ou plusieurs profils de sécurité d'authentification sélectionnés et une identité d'utilisateur identifiant l'utilisateur chez un fournisseur d'identité (IdP1) pour demander l'authentification de l'utilisateur par le fournisseur d'identité (IdP1), et
- recevoir une affirmation indiquant l'authentification de l'utilisateur par le fournisseur d'identité (IdP1).

9. Dispositif selon la revendication 8, moyennant quoi le dispositif est adapté afin de recevoir une indication du profil de sécurité d'authentification sur la base duquel l'authentification de l'utilisateur est exécutée par le fournisseur d'identité (IdP1) et le dispositif est en outre adapté afin de vérifier le profil de sécurité d'authentification indiqué en vue d'une acceptation.

10. Dispositif associé à un fournisseur de services (SP), le dispositif comprenant une unité de réception pour recevoir des messages, une unité de transmission pour envoyer des messages et une unité de traitement pour traiter des messages et des informations, moyennant quoi le dispositif est adapté afin de
- recevoir une demande d'accès d'un utilisateur à un service du fournisseur de services (SP),
- envoyer une identité d'utilisateur identifiant l'utilisateur à un fournisseur d'identité (IdP1) pour demander une authentification de l'utilisateur par le fournisseur d'identité (IdP1),
- recevoir une affirmation indiquant l'authentification de l'utilisateur en provenance du fournisseur d'identité (IdP1), l'affirmation étant complétée par une indication du profil de sécurité d'authentification comprenant au moins un attribut de sécurité, et
- vérifier le profil de sécurité d'authentification indiqué en vue d'une acceptation.

11. Dispositif selon l'une quelconque des revendications 8 à 10, moyennant quoi le dispositif est adapté afin de recevoir l'identité d'utilisateur et une référence au fournisseur d'identité (IdP1) en provenance d'un dispositif d'utilisateur en réponse à une demande d'authentification envoyée depuis le dispositif associé au fournisseur de services (SP) vers le dispositif d'utilisateur.

12. Dispositif selon l'une quelconque des revendications 8 à 11, moyennant quoi le dispositif est adapté afin d'accorder l'accès au service sur la base de l'affirmation.

13. Dispositif selon l'une quelconque des revendications 9 à 11, moyennant quoi le dispositif est adapté afin d'accorder l'accès au service sur la base de l'affirmation et de la vérification en vue d'une acceptation.

14. Dispositif associé à un fournisseur d'identité (IdP1), le dispositif comprenant une unité de réception pour recevoir des messages, une unité de transmission pour envoyer des messages et une unité de traitement pour traiter des messages et des informations, moyennant quoi le dispositif est adapté afin de
- recevoir une demande d'authentification d'un utilisateur, la demande comprenant une identité d'utilisateur identifiant l'utilisateur chez le fournisseur d'identité (IdP1) et une indication d'un ou plusieurs profils de sécurité d'authentification comprenant au moins un attribut de sécurité spécifiant une exigence de sécurité d'authentification du fournisseur de services (SP) en vue de l'authentification de l'utilisateur à un service du fournisseur de service (SP),
- authentifier l'utilisateur sur la base de l'identité d'utilisateur et d'un des un ou plusieurs profils de sécurité d'authentification, et
- envoyer une affirmation indiquant au fournisseur de services (SP) l'authentification de l'utilisateur.

15. Dispositif selon la revendication 14, moyennant quoi le dispositif est adapté afin de sélectionner un dit profil de sécurité d'authentification sur la base duquel l'authentification est exécutée parmi les profils de sécurité d'authentification.

16. Dispositif selon les revendications 14 ou 15, moyennant quoi le dispositif est adapté afin de compléter l'affirmation avec une indication du profil de sécurité d'authentification sur la base duquel l'authentification est exécutée.

17. Dispositif associé à un fournisseur d'identité (IdP1), le dispositif comprenant une unité de réception pour recevoir des messages, une unité de transmission pour envoyer des messages et une unité de traitement pour traiter des messages et des informations, moyennant quoi le dispositif est adapté afin de
- recevoir une demande d'authentification d'un utilisateur, la demande comprenant une identité d'utilisateur identifiant l'utilisateur chez le fournisseur d'identité (IdP1),
- authentifier l'utilisateur sur la base de l'identité d'utilisateur et d'un profil de sécurité d'authentification comprenant au moins un attribut de sécurité, et
- envoyer une affirmation indiquant au fournisseur de services (SP) l'authentification de l'utilisateur, l'affirmation étant complétée par une indication du profil de sécurité d'authentification sur la base duquel l'authentification de l'utilisateur est exécutée.

18. Programme informatique chargeable dans un dispositif associé à un fournisseur de services (SP), le programme informatique comprenant du code adapté afin d'exécuter les étapes du procédé selon l'une quelconque des revendications 1 à 7 dans la mesure où elles se rapportent au fournisseur de services (SP).

19. Programme informatique chargeable dans un dispositif associé à un fournisseur d'identité (IdP1), le programme informatique comprenant du code adapté afin d'exécuter les étapes du procédé selon l'une quelconque des revendications 1 à 7 dans la mesure où elles se rapportent au fournisseur d'identité (IdP1).
